# EUROPÄISCHE PATENTSCHRIFT

(11) **EP 3 071 861 B1**
(45) Veröffentlichungstag und Bekanntmachung des Hinweises auf die Patenterteilung: **10.01.2018**
(21) Anmeldenummer: 14802835.0
(22) Anmeldetag: 13.11.2014
(51) Int. Cl.: F16D 66/00, F16D 66/02, F16D 55/2255

(54) **SENSOREINRICHTUNG UND SCHEIBENBREMSE MIT EINER SENSOREINRICHTUNG**
SENSOR DEVICE AND DISC BRAKE COMPRISING A SENSOR DEVICE
DISPOSITIF DE DÉTECTION ET FREIN À DISQUE ÉQUIPÉ D'UN DISPOSITIF DE DÉTECTION

(30) Priorität: 20.11.2013 DE 102013112813
(43) Veröffentlichungstag der Anmeldung: 28.09.2016
(73) Patentinhaber: KNORR-BREMSE Systeme für Nutzfahrzeuge GmbH, 80809 München (DE)
(72) Erfinder: STAAHL, Christian, 81929 München (DE); KLINGNER, Matthias, 82272 Moorenweis (DE); PESCHEL, Michael, 82296 Schöngeising (DE)
(86) Internationale Anmeldenummer: PCT/EP2014/074507
(87) Internationale Veröffentlichungsnummer: WO 2015/074948

(56) Entgegenhaltungen:
- DE-A1-102010 032 515
- DE-A1-102012 102 582
- DE-B3-102006 042 777

## Beschreibung

Die Erfindung betrifft eine Sensoreinrichtung für eine Scheibenbremse, insbesondere für ein Kraftfahrzeug, nach dem Oberbegriff des Anspruchs 1. Die Erfindung bezieht sich auch auf eine Scheibenbremse mit einer solchen Sensoreinrichtung.

Derartige Sensoreinrichtungen werden zur Erfassung eines Verschleißzustands von Bremsbelägen und Bremsscheibe einer Scheibenbremse verwendet. Außerdem werden Sensoreinrichtungen auch benutzt, um eine Erfassung eines Betätigungshubs einer Zuspannvorrichtung einer Scheibenbremse vorzunehmen, um damit ein aktuelles Lüftspiel zu bestimmen.

Solche Scheibenbremsen sind üblicherweise druckluftbetätigt und mit automatisch wirkenden, mechanischen Verschleißnachstellvorrichtungen ausgestattet. Diese Verschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Verschleißnachstellvorrichtung z.B. durch eine Verstellbewegung von längenveränderlichen Gewinderohren.

Ein Beispiel einer Nachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Gewinderohrs weitergeleitet.

Zur Erfassung des Verschleißes ist es möglich, eine lineare Bewegung eines Nachstellgliedes direkt zu erfassen. Das Nachstellglied, z.B. eine Nachstellspindel, erfährt den gesamten Betätigungshub und den Nachstellweg. Ein Beispiel dazu illustriert das Dokument EP 1 892 435 B1. Dabei wird es als nachteilig angesehen, dass der Betätigungshub deutlich kleiner ist als der Verschleißweg. Zahlenbeispiele sind bei einer üblichen Bremse z.B. ein Betätigungshub von ungefähr 4,5 mm und ein Nachstellweg von ca. 60 mm.

Somit muss ein Messgeber gleichzeitig einen großen Messbereich und eine hohe Auflösung besitzen. Da dies in der Regel widersprüchlich ist, führt dies zu einem kostenaufwändigen Sensor. Zudem wird die Übertragung zu einem Fahrzeugsteuersystem erschwert. Eine derzeit übliche Schnittstelle von Bremse zu einem Fahrzeugsteuersystem ist eine analoge Übertragung, bei welcher eine elektrische Spannung in Bezug auf eine gemeinsame Masse dem Messwert entspricht. Da der Nachstellweg die Amplitude des Übertragungssignals bestimmt, wird diese Signalamplitude infolge des Betätigungshubs im gleichen Verhältnis wie ein maximaler Betätigungshub zu einem maximalen Verschleißweg stehen. Dazu soll ein Zahlenbeispiel der oben erwähnten üblichen Bremse angegeben werden. Die Spannungsamplitude beträgt 2,5 V. Bei einem Verschleißweg von 60 mm muss die Kennlinie des Sensors somit auf 2,5 V / 60 mm = 47,7 V/m ausgelegt sein, um den ganzen Messbereich abzudecken. Wenn man ein Rauschen mit einer Amplitude von 20 mV annimmt, kann somit der Betätigungshub höchstens mit einer Genauigkeit von 0,48 mm bestimmt werden. Ein Lüftspiel liegt in der Regel in der Größenordnung von 0,5...1,2 mm und ist auf diese Weise sehr schwierig zu bestimmen.

Eine Möglichkeit zur Umgehung der oben gezeigten Problematik bietet sich in der Verwendung eines separaten linearen Sensors oder eines Verdrehsensors für den Betätigungshub. Dieser zweite Sensor kann dann eine höhere Auflösung in einem kleineren Messbereich aufweisen. Nachteilig hierbei ist der Teileaufwand mit verbundenem Arbeitsaufwand aufgrund von zusätzlichem Sensor, zusätzlicher Leitungen oder Signalverarbeitungselektronik, um die zwei Signale elektrisch zu übertragen.

Die DE 102010032515 A1 beschreibt einen Bremsverschleißsensor einer Scheibenbremse. Hierbei wird eine Überlagerung von Nachstellweg und Betätigungshub mittels eines Planetengetriebes realisiert. Der Nachstellweg wird als eine Verdrehbewegung auf das Sonnenrad des Planetengetriebes eingeleitet. Hierfür bietet sich z.B. die Verdrehbewegung der/einer Nachstellspindel an. Der Betätigungshub wird als eine weitere Verdrehbewegung über den Planetenträger des Planetengetriebes eingeleitet. Die Verdrehung des Hohlrades des Planetengetriebes wird mit einem geeigneten Geber, z.B. einem Hall-Sensor, einem Potentiometer, einem induktiven, optischen oder akustischen Geberelement, erfasst. Hierdurch kann eine Übersetzung der Nachstellbewegung in der Größenordnung von z.B. 10 und eine Übersetzung des Betätigungshubs in der Größenordnung von z.B. 1 erreicht werden. Somit entstehen auf dem Hohlrad infolge der zwei Eingangsgrößen Ausschlagamplituden in der gleichen Größenordnung und können mit dem Geber mit einem zur notwendigen Auflösung angepassten Messbereich verwendet werden.

Aufgrund der ständig wachsenden Anforderungen, Teilezahlen und somit Kosten zu reduzieren, wobei gleichzeitig Qualität und Nutzen nicht nur beibehalten sondern erhöht werden sollen und außerdem eine erhöhte Anpassungsfähigkeit an unterschiedliche Einsatzbedingungen gefordert ist, ergibt sich ein dementsprechender Bedarf für eine verbesserte Sensoreinrichtung.

Die Aufgabe der vorliegenden Erfindung besteht darin, eine verbesserte Sensoreinrichtung bereitzustellen. Eine weitere Aufgabe ist es, eine verbesserte Scheibenbremse zu schaffen.

Die Aufgabe wird durch eine Sensoreinrichtung mit den Merkmalen des Anspruchs 1 gelöst.

Die Aufgabe wird auch durch eine Scheibenbremse mit den Merkmalen des Anspruchs 15 gelöst.

Es wird eine Sensoreinrichtung geschaffen, welche in ihrem Aufbau durch eine geringe Teileanzahl für unterschiedliche Aufgaben in einfacher Weise umstellbar ist. Dadurch kann z.B. eine Lagermenge reduziert werden und kurz vor dem Einsatz noch für verschiedene Zwecke einfach und schnell umgestellt werden.

Eine erfindungsgemäße Sensoreinrichtung für eine Scheibenbremse, weist ein mit mindestens einem Geber koppelbares Sensorgetriebe auf, wobei das Sensorgetriebe in einem Gehäuse als ein Planetengetriebe angeordnet ist und einen Eingang für eine von der Sensoreinrichtung zu erfassende erste Größe, die einem Verschleiß der Scheibenbremse zugeordnet ist, und einen Eingang für eine von der Sensoreinrichtung zu erfassende zweite Größe, die einem Betätigungshub der Scheibenbremse zugeordnet ist, aufweist. Die Sensoreinrichtung ist aus einem ersten Zustand zur Erfassung der ersten Größe, die einem Verschleiß der Scheibenbremse zugeordnet ist, und der zweiten Größe, die einem Betätigungshub der Scheibenbremse zugeordnet ist, in einen zweiten Zustand zur Erfassung von nur der ersten Größe, die einem Verschleiß der Scheibenbremse zugeordnet ist, umstellbar.

Eine erfindungsgemäße Scheibenbremse, insbesondere für ein Kraftfahrzeug, mit einer Zuspannvorrichtung mit einer Spreizmechanik, vorzugsweise mit einem Bremsdrehhebel, einer Verschleißnachstellvorrichtung, welche mindestens eine mechanische Nachstelleinrichtung aufweist, die vorzugsweise in eine Spindeleinheit der Scheibenbremse einsetzbar und mit der Spreizmechanik, vorzugsweise mit dem Bremsdrehhebel, gekoppelt ist, ist mit einer erfindungsgemäßen Sensoreinrichtung ausgerüstet. Der Eingang des Sensorgetriebes der Sensoreinrichtung für die zu erfassende erste Größe ist mit der mindestens einen mechanischen Nachstelleinrichtung gekoppelt, und der Eingang des Sensorgetriebes der Sensoreinrichtung für die zu erfassende zweite Größe ist mit der Spreizmechanik, vorzugsweise mit dem Bremsdrehhebel, über einen Hubsensorantrieb gekoppelt.

Auf diese Weise wird es ermöglicht, dass der Betätigungshub, der eine lineare, abgesehen von der Schwenkbewegung einer Brücke der Scheibenbremse, Bewegung ist, in eine Dreh- bzw. Schwenkbewegung umgewandelt wird und auf den zweiten Eingang des Sensorgetriebes übertragen wird.

In dieser Ausführung der Sensoreinrichtung ist das Sensorgetriebe mit einer Schnittstelle zum Ankoppeln eines Gebers ausgerüstet. Dies kann z.B. eine drehfeste Steckverbindung sein. Dadurch ist ein nachträglicher Zusammenbau auch mit unterschiedlichen Gebern ermöglicht.

Weitere vorteilhafte Ausgestaltungen sind in den Unteransprüchen angegeben.

Die Spreizmechanik, vorzugsweise der Bremsdrehhebel, treibt zwei Antriebe an, nämlich zum Einen die Nachstelleinrichtung und zum Anderen den Hubsensorantrieb.

In einer Ausführung ist der Eingang des Sensorgetriebes für die zu erfassende erste Größe ein Sonnenrad des Sensorgetriebes, und ein Eingang für die zu erfassende zweite Größe ist ein Planetenträger des Sensorgetriebes mit einer Planetenträgerverzahnung. Das Planetengetriebe dient als ein einziges Sensorgetriebe zur Überlagerung beider Eingangsgrößen und kann ohne eigene Veränderungen verwendet werden.

In einer weiteren Ausführung steht der Eingang für die zu erfassende zweite Größe in dem ersten Zustand der Sensoreinrichtung mit einer Hubsensorantriebseinheit in Eingriff und in dem zweiten Zustand der Sensoreinrichtung ist er blockiert. Damit ist durch Umstellen eine einfache Anpassung an die beiden Zustände möglich.

Hierbei weist die Hubsensorantriebseinheit mindestens ein Zahnrad auf, welches in dem ersten Zustand der Sensoreinrichtung mit der Planetenträgerverzahnung, die eine Außenverzahnung ist, in einer Öffnung des Gehäuses in Eingriff steht. Mit dem mindestens einen Zahnrad ist eine Übertragung mit einer bestimmten Übersetzung möglich, wodurch die nachfolgende Verdrehung des Hohlrads infolge des Betätigungshubs zu derjenigen Verdrehung des Hohlrads infolge der Nachstellung, d.h. durch den ersten Eingang abstimmbar ist. Die Übertragung kann mit geringem Spiel erfolgen, wobei der Betätigungshub mit einer hohen Genauigkeit und einer hohen Auflösung im Gegensatz zum Stand der Technik erfassbar ist.

Weiterhin kann die Verschwenkung des Bremsdrehhebels, der z.B. als Exzenterhebel ausgeführt ist, verwendet werden, um den Betätigungshub als Verschwenk-/Verdrehbewegung in das Planetengetriebe einzuleiten. Das Problem, dass die Schwenkachsen von Bremsdrehhebel und Nachstellspindel bzw. Sensorachse der Sensoreinrichtung nicht in einer Ebene liegen und einen Achsversatz haben, wird durch das Zahnrad gelöst, wobei der Achsversatz auf einfache Weise ausgeglichen wird. Das ist vorteilhaft, da dieser Achsversatz eine Folge der Auslegung des Bremsdrehhebels als Exzenterhebel ist und sich aus Bauraumgründen nicht ausgleichen lässt.

In einer weiteren Ausführung ist vorgesehen, dass das mindestens eine Zahnrad in einer Halterung und dem Gehäuse drehbar gelagert und axial begrenzt ist. Damit ist eine einfache Ergänzung und Montage des Zahnrads ermöglicht.

Wenn die Halterung an dem Gehäuse wieder entfernbar befestigbar ist, kann das Zahnrad schnell eingebaut werden.

In einer anderen Ausführung ist der Eingang für die zu erfassende zweite Größe in dem zweiten Zustand der Sensoreinrichtung durch mindestens einen Fixierzahn einer mit dem Gehäuse verdrehfest verbundenen Halterung verdrehfest blockiert, wobei der mindestens eine Fixierzahn mit der Planetenträgerverzahnung, welche eine Außenverzahnung ist, in einer Öffnung des Gehäuses in Eingriff steht. Somit kann ein vorhandenes Zahnrad mit Halterung in einfacher Weise gegen eine Halterung mit integriertem Fixierzahn schnell getauscht werden, wodurch ein schnelles Umstellen möglich ist.

Wenn die Halterung an dem Gehäuse wieder entfernbar befestigbar ist, ist ein reversibles Umstellen gegeben.

In einer alternativen Ausführung ist der Eingang des Sensorgetriebes für die zu erfassende erste Größe eine Antriebswelle mit mindestens einer Getriebestufe, die mit einem Sonnenrad des Sensorgetriebes gekoppelt ist, und ein Eingang für die zu erfassende zweite Größe ist ein Planetenträger des Sensorgetriebes mit einer Planetenträgerverzahnung. Der oben genannte Achsversatz wird hier durch den Abstand von Antriebswelle und Sonnenrad ausgeglichen. Das Sensorgetriebe kann seinen Raumbedarf jedoch beibehalten.

Weiterhin ist vorgesehen, dass der Eingang für die zu erfassende zweite Größe in dem ersten Zustand der Sensoreinrichtung mit einer Hubsensorantriebseinheit in Eingriff steht oder zum direkten Eingriff eines Hubsensorbetätigers einer zuzuordnenden Scheibenbremse vorgesehen ist und in dem zweiten Zustand der Sensoreinrichtung blockiert ist. Da die Hebelschwenkachse und die Achse des Eingangs, d.h. des Planetenträgers, in einer Ebene liegen, kann der Hubsensorbetätiger direkt mit dem Planetenträger in Eingriff stehen. Natürlich können auch eine oder mehrere Getriebestufen zwischengeschaltet werden.

In einer anderen Ausführung ist der Eingang für die zu erfassende zweite Größe in dem zweiten Zustand der Sensoreinrichtung durch mindestens einen Fixierarm verdrehfest blockiert, wobei der mindestens eine Fixierarm mit der Planetenträgerverzahnung, welche eine Außenverzahnung ist, in Eingriff steht. Für eine schnelle Umstellung kann der mindestens eine Fixierarm an dem Gehäuse wieder entfernbar befestigbar sein. Damit ist eine reversible Umstellung möglich. Eine irreversible Umstellung ist natürlich auch möglich, wenn der mindestens eine Fixierarm mit dem Gehäuse über einen Sollbruchabschnitt trennbar verbunden ist.

Es ist vorteilhaft, wenn der mindestens eine Fixierarm in Gestalt eines Einsetzteils in das Gehäuse verdrehfest einsetzbar und wieder entfernbar ist, da so eine einfache und schnelle reversible Umstellung möglich ist.

In einer weiteren Ausführung weist die oben Sensoreinrichtung mindestens einen Geber auf, der mit dem Sensorgetriebe gekoppelt ist. So kann die Sensoreinrichtung als vormontierte Baueinheit schon zusammen mit einem Geber ausgeführt sein.

Eine Scheibenbremse ist mit mindestens zwei Spindeleinheiten, wobei die mindestens eine mechanische Nachstelleinrichtung mit einem Mitnehmer über eine Synchroneinheit gekoppelt ist, ausgebildet. Dabei ist der Eingang des Sensorgetriebes der Sensoreinrichtung für die zu erfassende erste Größe mit einer Mitnehmerwelle des Mitnehmers gekoppelt. Dadurch lässt sich eine effektive Bauraumausnutzung ermöglichen.

Aufgrund der rechtwinkligen Anordnung von Hebelschwenkachse und Drehachse der Nachstellspindel weist der Hubsensorantrieb ein Winkelgetriebe auf. Ein Winkelgetriebe ist, mit wenigen Ausnahmen, deutlich toleranzempfindlicher als ein Stirnradgetriebe.

In einer anderen Ausführung ist der Achsversatz zwischen einer Ebene einer Hebelschwenkachse des Bremsdrehhebels und einer Ebene einer Sensorachse der Sensoreinrichtung durch mindestens eine Getriebestufe der Hubsensorantriebseinheit ausgeglichen. So ist ein Winkelgetriebe, sogar mit einer Kronenverzahnung, möglich. Die Kronenradverzahnung ist bezüglich Positionstoleranzen relativ unempfindlich. Es ist natürlich auch z.B. ein Hypoidgetriebe möglich, wobei eine Empfindlichkeit gegenüber Positionstoleranzen erhöht ist und eine Qualitätskontrolle aufwändiger werden könnte.

In einer alternativen Ausführung ist die Sensoreinrichtung in der Scheibenbremse so angeordnet, dass ein Achsversatz zwischen einer Ebene einer Hebelschwenkachse des Bremsdrehhebels, in welcher eine Sensorachse der Sensoreinrichtung liegt, und einer Ebene einer Achse einer Spindeleinheit durch mindestens eine Getriebestufe einer Antriebswelle, welche ein Eingang des Sensorgetriebes der Sensoreinrichtung für die zu erfassende erste Größe ist, ausgeglichen. Dabei kann der Hubsensorbetätiger z.B. mit einer Kronenradverzahnung direkt mit dem Planetenträger, oder auch mit dem Hohlrad, zusammenwirken.

Die Scheibenbremse kann auch druckluftbetätigt sein.

Für eine Variantenbildung der Sensoreinrichtung ist es besonders vorteilhaft, dass möglichst viele Gleichteile verwendet werden können und nur sehr wenige Teile zur Umstellung notwendig sind. Im Stand der Technik kann eine Variante lediglich nur mit Nachstellwegerfassung nur dadurch erreicht werden, dass der Planetenträger fixiert wird.

Im Gegensatz dazu kann durch Ersetzen des Zahnrads mit einem Fixierbauteil, d.h. mit der Halterung mit integriertem Fixierzahn, die Sensorvariante ohne Betätigungshuberfassung in einfacher Weise, sogar reversibel, umgestellt werden. Der Anteil an Gleichteilen ist besonders vorteilhaft groß.

Die Erfindung wird nun anhand einer beispielhaften Ausführung mit Bezug auf die beigefügten Zeichnungen näher erläutert. Hierbei zeigen:
- Fig. 1: eine schematische Teilschnittansicht eines Ausführungsbeispiels einer erfindungsgemäßen Scheibenbremse mit einer erfindungsgemäßen Sensoreinrichtung;
- Fig. 2: eine schematische Schnittansicht des Ausführungsbeispiels längs der Linie II-II nach Fig. 1;
- Fig. 3: eine schematische Perspektivansicht eines ersten Ausführungsbeispiels der erfindungsgemäßen Sensoreinrichtung;
- Fig. 4: eine schematische, perspektivische Schnittansicht des ersten Ausführungsbeispiels nach Fig. 3;
- Fig. 5: eine weitere schematische Schnittansicht des ersten Ausführungsbeispiels nach Fig. 3;
- Fig. 6: eine schematische Perspektivansicht einer Variante des ersten Ausführungsbeispiels der erfindungsgemäßen Sensoreinrichtung;
- Fig. 7: eine schematische, perspektivische Schnittansicht der Variante nach Fig. 6;
- Fig. 8: eine schematische Schnittansicht eines zweiten Ausführungsbeispiels der erfindungsgemäßen Sensoreinrichtung;
- Fig. 9: eine schematische Perspektivansicht des zweiten Ausführungsbeispiels nach Fig. 8; und
- Fig. 10: eine weitere schematische Schnittansicht des zweiten Ausführungsbeispiels nach Fig. 8.

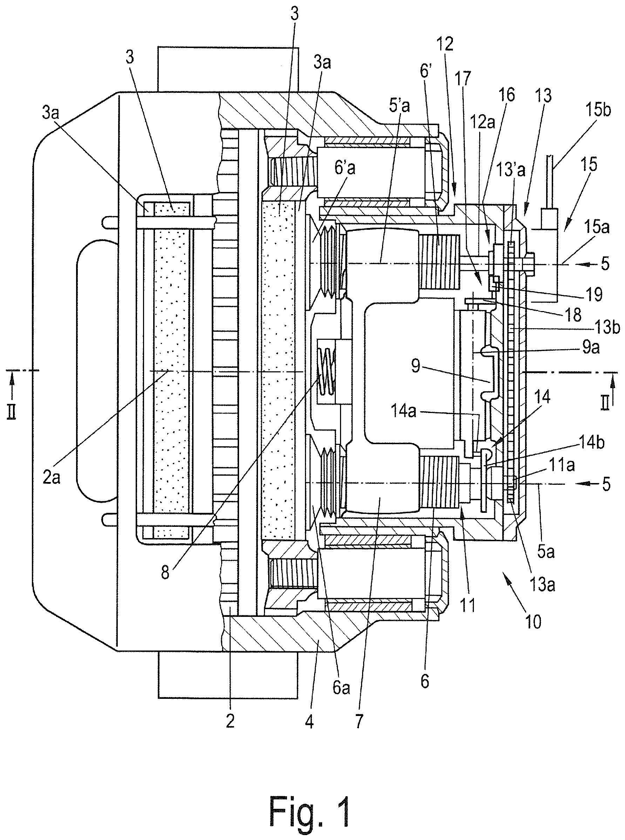

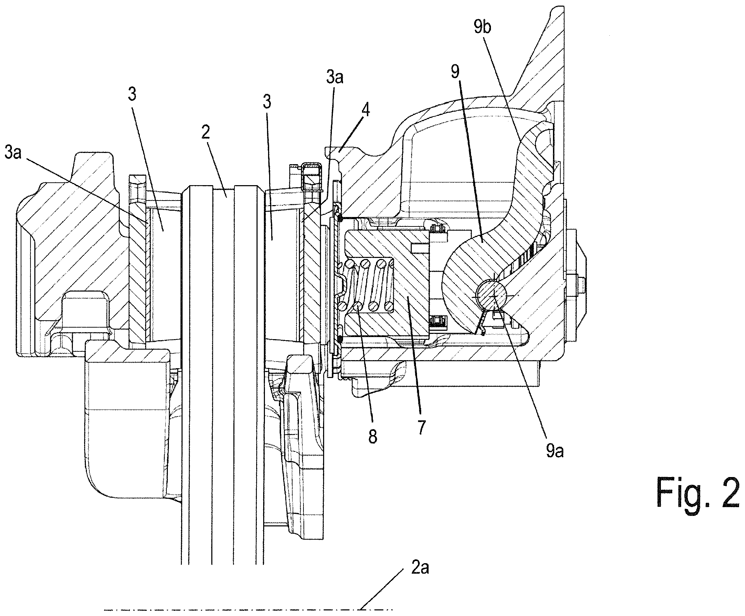

In Fig. 1 ist eine schematische Perspektivansicht eines Ausführungsbeispiels einer erfindungsgemäßen Scheibenbremse 1 mit einer erfindungsgemäßen Sensoreinrichtung 15 und einer Verschleißnachstellvorrichtung 10 gezeigt. Fig. 2 zeigt eine schematische Schnittansicht des Ausführungsbeispiels längs der Linie II-II nach Fig. 1.

In diesem Ausführungsbeispiel ist die Scheibenbremse 1 in einer Ausführung als zweistempelige Bremse mit einem Bremssattel 4 gezeigt, welcher eine Bremsscheibe 2 übergreift. Die Bremsscheibe 2 ist um eine Bremscheibenachse 2a drehbar, wobei beidseitig der Bremsscheibe 2 jeweils ein Bremsbelag 3 auf einem Bremsbelagträger 3a angeordnet ist. Weiterhin ist die Scheibenbremse 1 mit einer Zuspannvorrichtung, die hier mit einem Bremsdrehhebel 9 ausgeführt ist, zur Zuspannung der Scheibenbremse 1 ausgebildet. Der Bremsdrehhebel 9 wird auch als Spreizmechanik bezeichnet, ist Teil der Zuspannvorrichtung, ist um eine Hebelschwenkachse 9a verschwenkbar und weist einen Hebelarm 9b auf, welcher z.B. von einem Druckluftbremszylinder betätigbar ist. Der Bremsdrehhebel 9 ist hier über eine nicht näher bezeichnete Lagerwalze am Bremssattel 4 um die Hebelschwenkachse 9a verschwenkbar gelagert.

Eine Brücke 7 steht mit dem Bremsdrehhebel 9 in Kontakt und ist von diesem beim Zuspannen und Lösen der Bremse in Richtung der Bremsscheibenachse 2a auf die Bremsscheibe 2 hin und zurück betätigbar. Die Brücke 7 ist an ihren Enden jeweils mit einer Spindeleinheit 5, 5' über jeweils ein Gewinderohr 6, 6' gekoppelt. Jede Spindeleinheit 5, 5' weist eine Achse 5a, 5'a auf, wobei die Achse 5a der Spindeleinheit 5 als Nachstellerachse 5a und die Achse 5'a der Spindeleinheit 5' als Mitnehmerachse 5'a bezeichnet werden. Die Nachstellerachse 5a und die Mitnehmerachse 5'a verlaufen parallel und liegen rechtwinklig zu der Bremsscheibenachse 2a. Die Hebelschwenkachse 9a liegt parallel zu der Bremsscheibenachse 2a und rechtwinklig zu der Nachstellerachse 5a und der Mitnehmerachse 5'a.

Die in Fig. 1 links angeordneten Enden der Spindeleinheiten 5, 5', welche zur Bremsscheibe 2 weisen, sind jeweils mit einem Druckstück 6, 6'a versehen. Die Druckstücke 6, 6'a stehen mit einem Bremsbelagträger 3a eines zuspannseitigen Bremsbelags 3 in Kontakt, welcher auf einer Seite der Bremsscheibe 2 der Scheibenbremse 1 angeordnet ist. Auf der anderen Seite der Bremsscheibe 2 ist ein weiterer Bremsbelag 3 mit Bremsbelagträger 3a im Bremssattel 4 festgelegt. Dieser Bremsbelag 3 wird auch reaktionsseitiger Bremsbelag 3 genannt. Der Bremssattel 4 kann beispielsweise ein Schiebesattel sein.

Ein Abstand zwischen einem Bremsbelag 3 und der Bremsscheibe 2 wird als Lüftspiel bezeichnet. Bei einem Bremsvorgang wird bei Betätigung der Scheibenbremse 1 zunächst das Lüftspiel überbrückt, indem der Bremsbelag 3 durch die vom Bremshebel 9 betätigte Brücke 7 gegen die Bremsscheibe 2 der Scheibenbremse 1 verstellt wird. Aufgrund des Verschleißes der Bremsbeläge 3 und auch der Bremsscheibe 2 wird das Lüftspiel vergrößert.

Der Begriff "Reibepunkt" ist der Punkt, in welchem der Bremsbelag 3 an der Bremsscheibe 2 der Scheibenbremse 1 anliegt. Der Reibepunkt wird beim Zuspannen nach Überbrückung des Lüftspiels erreicht. Weiteres Zuspannen bewirkt dann durch Anpressen des Bremsbelags 3 an die Bremsscheibe 2 eine Bremsung. Dies gilt natürlich auch für den reaktionsseitigen Bremsbelag 3. Ein Lösen der Zuspannvorrichtung bewirkt eine Umkehrung des oben beschriebenen Vorgangs.

Die Scheibenbremse 1 umfasst in der in Fig. 1 gezeigten Ausführung außerdem eine Verschleißnachstellvorrichtung 10, welche zur Nachstellung des Bremsbelags 3/der Bremsbeläge 3 bei Verschleiß dient, um das ursprüngliche Lüftspiel wiederherzustellen.

Die Verschleißnachstellvorrichtung 10 umfasst eine Nachstelleinrichtung 11 mit einer Nachstellerwelle 11a, einen Mitnehmer 12 mit einer Mitnehmerwelle 12a und eine Synchroneinheit 13 zur Kopplung von Nachstelleinrichtung 11 und Mitnehmer 12.

Die Nachstelleinrichtung 11 wird hier nicht näher erläutert, sie kann z.B. wie in DE 10 2004 037 771 A1 beschrieben ausgebildet sein und ist in der Spindeleinheit 5 in dem zugehörigen Gewinderohr 6 eingesetzt und mit diesem gekoppelt. Eine Längsachse der Nachstellerwelle 11a bildet die Nachstellerachse 5a.

Mittels der Synchroneinrichtung 13 ist die Nachstelleinrichtung 11 mit dem Mitnehmer 12 derart gekoppelt, dass eine Verdrehung der Nachstellerwelle 11a und des damit drehfest verbundenen Gewinderohrs 6 synchron auf die Mitnehmerwelle 12a und somit auf das mit der Mitnehmerwelle 12a drehfest verbundene Gewinderohr 6' übertragen wird. In Fig. 1 ist die Synchroneinheit 13 nur schematisch dargestellt, wobei die Nachstellerwelle 11a mit einem Synchronrad 13a, hier ein Kettenrad, der Synchroneinheit 13 drehfest verbunden ist. Das Synchronrad 13a steht über ein Synchronmittel 13b, hier eine Kette, mit einem weiteren Synchronrad 13'a, das mit der Mitnehmerwelle 12a direkt oder indirekt drehfest gekoppelt ist, in Verbindung.

Diese Ausbildung der Synchroneinheit 13 ist nur beispielhaft zu sehen, andere Kopplungen, z.B. der Gewinderohre 6, 6' untereinander, sind natürlich auch möglich.

Durch jede Zustellbewegung des Bremsdrehhebels 9, bei welcher der Bremsdrehhebel 9 um seine Hebelschwenkachse 9a im Gegenuhrzeigersinn (Fig. 2) verschwenkt, wird die Nachstelleinrichtung 11 angetrieben. Dies erfolgt über einen Nachstellerantrieb 14, der einen mit dem Bremsdrehhebel 9 fest verbundenen Betätiger 14a und ein mit der Nachstelleinrichtung 11 gekoppeltes Nachstellerantriebselement 14b umfasst. Der Betätiger 14a und das Nachstellerantriebselement 14b stehen untereinander in Eingriff. Der Betätiger 14a kann z.B. als Stift ausgebildet sein. Das Nachstellerantriebselement 14b kann z.B. mit einer Schaltgabel versehen sein, die mit dem Betätiger 14a zusammenwirkt.

Wenn bei der Zustellbewegung des Bremsdrehhebels 9 (noch) kein Verschleiß vorliegt, dann erfolgt aufgrund z.B. einer Überlastkupplung der Nachstelleinrichtung 11 keine Übertragung einer Antriebsbewegung auf die Nachstellerwelle 11a. Liegt jedoch ein Verschleiß vor, so wird die Antriebsbewegung auf die Nachstellerwelle 11a der Nachstelleinrichtung 11 übertragen, um den Bremsbelag 3 nachzustellen, wodurch das Lüftspiel auf den ursprünglichen Wert eingestellt wird. Mit der Synchroneinheit 13 wird diese Antriebsbewegung der Nachstellerwelle 11a auf die Mitnehmerwelle 12a übertragen.

Die Scheibenbremse 1 ist mit einer Sensoreinrichtung 15 ausgerüstet. In einem ersten Zustand ist die Sensoreinrichtung 15 zur Erfassung einer ersten Größe, nämlich des Verschleißes der Bremsbeläge 3 einschließlich der Bremsscheibe 2, und zur Erfassung einer zweiten Größe, nämlich eines Betätigungshubs der Zuspannvorrichtung, ausgebildet. Die Sensoreinrichtung 15 kann von diesem ersten Zustand in einen zweiten Zustand umgestellt werden. In dem zweiten Zustand erfasst die Sensoreinrichtung 15 nur eine Größe, nämlich die erste Größe, den Verschleiß. Die Umstellbarkeit der Sensoreinrichtung 15 wird unten noch ausführlich beschrieben.

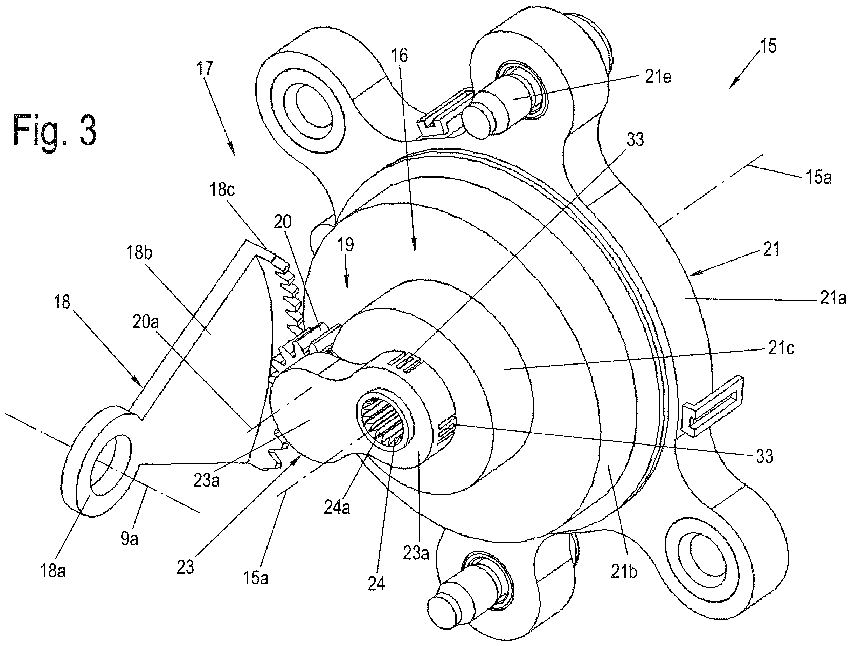

Die Erfassung der ersten Größe, nämlich des Verschleißes, erfolgt z.B. durch die Erfassung der Nachstellbewegung der Nachstellerwelle 11a bzw. der Mitnehmerwelle 12a. Dazu ist die Sensoreinrichtung 15 mit einem nicht gezeigten Geber, z.B. einem Hall-Sensor, einem Potentiometer, einem induktiven, oder/und optischen oder/und akustischen Geberelement, ausgebildet. Der nicht gezeigte Geber ist über eine Sensoranschlussleitung 15b mit einer Auswerteeinheit, beispielsweise in einem Bremssteuergerät, verbunden. In dem in Fig. 1 gezeigten schematischen Ausführungsbeispiel ist eine Sensorachse 15a der Sensoreinrichtung 15 so angeordnet, dass die Mitnehmerachse 5'a mit der Sensorachse 15a übereinstimmt. Die Sensoreinrichtung 15 ist hier koaxial zu der Spindeleinheit 5' angeordnet und von der Zuspannseite an dem Bremssattel 4 angebracht und an diesem befestigt, was unten beschrieben wird (siehe Fig. 3-5). Weiterhin ist die Sensoreinrichtung 15 mit der Mitnehmerwelle 12a gekoppelt. Da die Nachstellbewegung der Nachstellerwelle 11a mittels der Synchroneinheit 13 auf die Mitnehmerwelle 12a übertragen wird, kann hier die Nachstellbewegung der Mitnehmerwelle 12a zur Erfassung des Verschleißes verwendet werden. Die Kopplung mit der Mitnehmerwelle 12a mit der Sensoreinrichtung 15 kann auf verschiedene Weise erfolgen. Dies wird unten noch weiter beschrieben.

Außerdem ist die Sensoreinrichtung 15 in diesem Ausführungsbeispiel derart ausgestaltet, dass sie auch die zweite Größe erfassen kann, nämlich einen Betätigungshub der Zuspannvorrichtung der Scheibenbremse 1, welcher hier die Bewegung des Bremsdrehhebels 9 ist. Diese erfassten zwei Größen werden mittels eines Sensorgetriebes 16, das z.B. als ein Überlagerungsgetriebe ausgebildet ist und dazu zwei Eingänge aufweist, überlagert auf den Geber der Sensoreinrichtung 15 übertragen. Zur allgemeinen Funktion einer solchen Sensoreinrichtung 15 wird auf die Beschreibung in dem Dokument DE 102010032515 A1 verwiesen.

Der Betätigungshub ist eine lineare Bewegung (abgesehen von der Schwenkbewegung der Brücke 7) und wird hier zur Erfassung als zweite Größe für die Sensoreinrichtung 15 in eine Dreh- bzw. Schwenkbewegung umgewandelt. Dies erfolgt mittels eines Hubsensorantriebs 17, über welchen die Sensoreinrichtung 15 mit dem Bremsdrehhebel 9 gekoppelt ist. Der Hubsensorantrieb 17 umfasst einen mit dem Bremsdrehhebel 9 verbundenen Hubsensorbetätiger 18 und eine mit der Sensoreinrichtung 15 gekoppelte Hubsensorantriebseinheit 19.

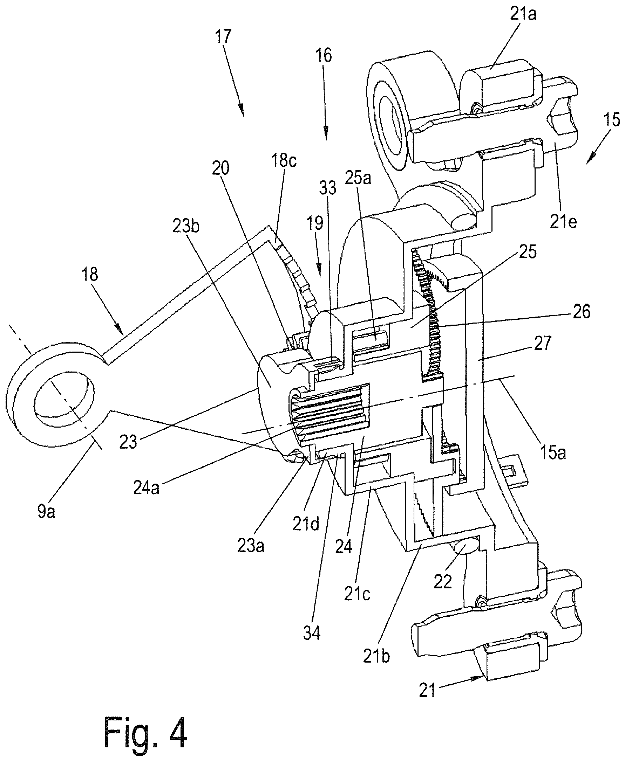

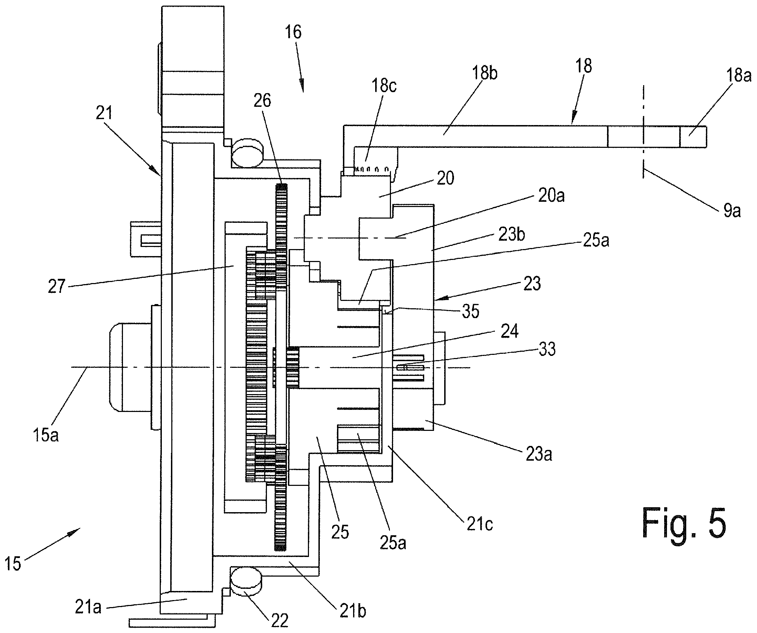

Hierzu zeigt Fig. 3 eine schematische Perspektivansicht eines ersten Ausführungsbeispiels der erfindungsgemäßen Sensoreinrichtung 15. In Fig. 4 ist eine schematische, perspektivische Schnittansicht des ersten Ausführungsbeispiels nach Fig. 3 dargestellt. Fig. 5 zeigt eine weitere schematische Schnittansicht des ersten Ausführungsbeispiels nach Fig. 3.

In den Figuren 3 bis 5 ist der Hubsensorantrieb 17 mit dem Hubsensorbetätiger 18 und der Hubsensorantriebseinheit 19 zusammen mit der Sensoreinrichtung 15 in verschiedenen Ansichten und Schnitten dargestellt. So zeigt Fig. 4 einen zu der Hebelschwenkachse 9a senkrechten Schnitt durch die mit der Mitnehmerachse 5'a zusammenfallende Sensorachse 15a. Die Schnittansicht der Fig. 5 ist ein zu der mit der Mitnehmerachse 5'a zusammenfallenden Sensorachse 15a paralleler Schnitt in der Ebene der Hebelschwenkachse 9a.

Die Sensoreinrichtung 15 mit ihrer Sensorachse 15a weist ein Gehäuse 21 auf, welches sowohl den Geber als auch das Sensorgetriebe 16 aufnimmt.

Es ist möglich, dass die Sensoreinrichtung 15 entweder mit einem Geber oder ohne einen Geber ausgeführt werden kann. Der Geber kann auch nachträglich eingebaut werden.

Das Gehäuse 21 umfasst in diesem Beispiel einen Gehäuseflansch 21a und zwei Getriebeaufnahmen 21b und 21c. Der Gehäuseflansch 21a weist an seinem Umfang eine Art radial abstehender Augen zur Befestigung am Bremssattel 4 (siehe Fig. 1), wobei hierzu Befestigungselemente 21e, z.B. Schrauben, zur Befestigung verwendet werden. Hier wird die Sensoreinrichtung 15 mit dem Gehäuseflansch 21a von außen (siehe Fig. 1), d.h. von der Zuspannseite her, angebracht. Außerdem ist der Gehäuseflansch 21a mit nicht näher bezeichneten, rechteckigen Haltelaschen versehen, welche zur Fixierung eines Deckels mit dem ebenfalls nicht gezeigten Geber vorgesehen sind. Diese Haltelaschen können z.B. mit korrespondierenden Haltenasen dieses Deckels klipsartig zusammenwirken.

An dem Gehäuseflansch 21a ist auf der Seite zur Bremsscheibe 2 hin (siehe Fig. 1) dieser mit der ersten Getriebeaufnahme 21b verbunden. Die Getriebeaufnahme 21b ist zylinderförmig und besitzt eine Wand, welche zur Seite zur Bremsscheibe 2 hin hervorsteht und bremsscheibenseitig zum Teil mit einer Ringplatte verschlossen ist. Die Wand der ersten Getriebeaufnahme 21b weist einen Außendurchmesser auf, der kleiner ist als ein Außendurchmesser eines Absatzes, der in der Verbindung zwischen der ersten Getriebeaufnahme 21b und dem Gehäuseflansch 21a angeordnet ist. Auf diesem Absatz ist hier eine Dichtung 22, z.B. ein O-Ring, aufgebracht, der zur Abdichtung des Gehäuses 21 der Sensoreinrichtung 15 gegenüber dem Bremssattel 4 vorgesehen ist.

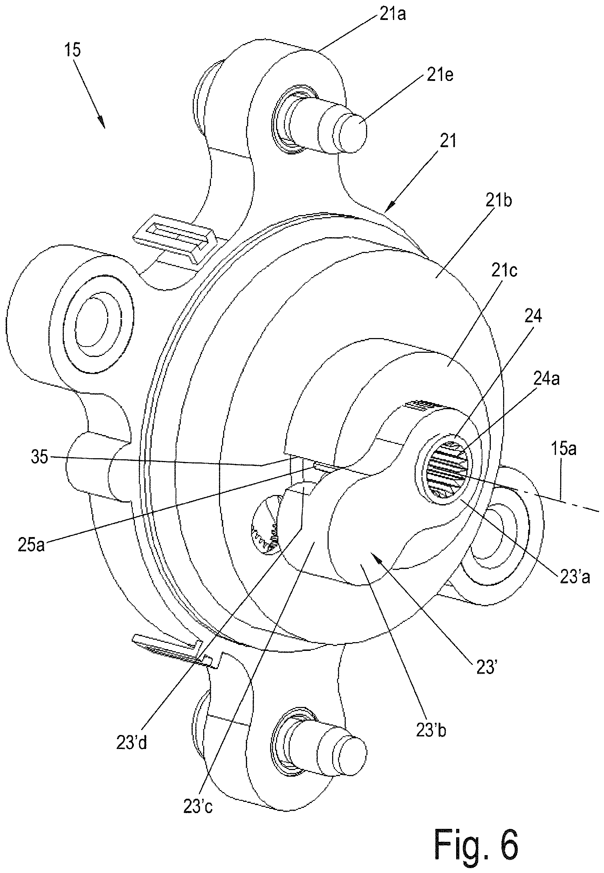

Die Ringplatte der ersten Getriebeaufnahme 21b weist eine Bohrung auf. Der Rand dieser Bohrung ist mit einer Wand der zweiten Getriebeaufnahme 21c verbunden, welche teilzylinderförmig mit einer Öffnung 35 (siehe Fig. 5 und 6), deren Funktion unten noch beschrieben wird, ausgebildet ist. Auch diese teilzylinderförmige Wand steht zur Seite zur Bremsscheibe 2 hin hervor und ist bremsscheibenseitig zum Teil auch mit einer Ringplatte verschlossen. Die Wand der zweiten Getriebeaufnahme 21c weist einen Außendurchmesser auf, der kleiner ist als der Außendurchmesser der Wand der ersten Getriebeaufnahme 21b. Die Ringplatte der zweiten Getriebeaufnahme 21c ist mit einer Bohrung versehen, an deren Rand ein zylinderförmiger Lagerabschnitt 21d zur Bremsscheibe 2 hin hervorsteht.

Das Gehäuse 21 mit dem Gehäuseflansch 21a, den Getriebeaufnahmen 21b, 21c einschließlich der Ringplatten und dem Lagerabschnitt 21d ist beispielsweise einstückig aus einem geeigneten Werkstoff hergestellt. Dieser Werkstoff kann z.B. Kunststoff oder ein Metall oder eine Kombination aus beiden sein.

Das Sensorgetriebe 16 ist hier als Planetengetriebe ausgebildet und umfasst ein Sonnenrad 24, einen Planetenträger 25 mit Planetenrädern 26 und ein Hohlrad 27. Das Sensorgetriebe 16 ist immer nur bis zu seinem Hohlrad 27 gezeigt, wobei der damit gekoppelte Geber nicht dargestellt ist und je nach gewähltem Messprinzip variieren kann.

In der ersten Getriebeaufnahme 21b sind das Hohlrad 27 und ein Abschnitt des Planetenträgers 25 mit den Planetenrädern 26 und weiteren Getriebestufen angeordnet, auf die hier nicht weiter eingegangen wird. Der Planetenträger 25 ist über einen Wellenabsatz in der Bohrung der Ringplatte der ersten Getriebeaufnahme 21b aufgenommen, wobei ein zur Bremsscheibe 2 weisender Abschnitt des Planetenträgers 25 mit einer Planetenträgerverzahnung 25a in der zweiten Getriebeaufnahme 21c angeordnet ist. Die Planetenträgerverzahnung 25a ist eine Außenverzahnung.

Das Sonnenrad 24 ist innerhalb des Planetenträgers 25 aufgenommen, wobei das Sonnenrad 24 über einen Wellenabsatz in der Bohrung der Ringplatte der zweiten Getriebeaufnahme 21c gelagert ist. Ein Ritzel des Sonnenrads 24 steht an einem zuspannseitigen Endabschnitt des Sonnenrads 24 in die erste Getriebeaufnahme 21b hervor und steht mit Sonnenrädern 26 in Eingriff. Der andere, bremsscheibenseitige Endabschnitt des Sonnenrads 24 ist so verlängert, dass er in dem Lagerabschnitt 21d des Gehäuses 21 vollständig gelagert ist, sich durch diesen hindurch erstreckt und aus diesem um ein bestimmtes Maß hervorsteht. Außerdem ist dieser bremsscheibenseitige Endabschnitt des Sonnenrads 24 mit einem innenliegenden Kopplungsabschnitt 24a versehen, der sich mit einer Innenverzahnung, z.B. eine Kerbverzahnung, von einer Öffnung am bremsscheibenseitigen Ende des Sonnenrads 24 in diesem durch den Lagerabschnitt 21d bis in die zweite Getriebeaufnahme 21c hindurch erstreckt. Der Kopplungsabschnitt 24a bildet in diesem Fall einen Eingang für die erste von der Sensoreinrichtung 15 zu erfassende Größe, nämlich den Verschleiß, und ist zur Kopplung der Sensoreinrichtung 15 mit der Mitnehmerwelle 12a (oder der Nachstellerwelle 11a, was nicht gezeigt, aber vorstellbar ist, z.B. bei einer einstempeligen Ausführung der Scheibenbremse 1) vorgesehen. Dazu weist das zugehörige Ende der Mitnehmerwelle 12a (oder der Nachstellerwelle 11a) oder eines Zwischenteils ein entsprechende Profilierung auf. Diese Kopplung dient zur Verschleißerfassung, d.h. zur Erfassung einer ersten Größe, durch die Sensoreinrichtung 15.

Das Sensorgetriebe 16 der Sensoreinrichtung 15 ist mit der Hubsensorantriebseinheit 19 über den Hubsensorantrieb 17 zur Erfassung der zweiten Größe, nämlich des Betätigungshubs, gekoppelt.

Die Hubsensorantriebseinheit 19 weist hier eine Getriebestufe mit einem Zahnrad 20 mit einer Zahnradachse 20a auf. Das Zahnrad 20 bildet in diesem Ausführungsbeispiel eine Kopplung zwischen dem Hubsensorbetätiger 18 und dem Sensorgetriebe 16, was unten noch ausführlicher erläutert wird.

Der Hubsensorbetätiger 18 ist mit dem Bremsdrehhebel 9 verbunden. Der Bremsdrehhebel 9 ist in den Figuren 3-5 bis auf seine Hebelschwenkachse 9a aus Gründen der Übersichtlichkeit nicht gezeigt. Im Zusammenhang mit Fig. 1 ist der Bremsdrehhebel 9 aber leicht vorstellbar.

Der Hubsensorbetätiger 18 ist hier als eine Art Kreissegment mit einem Flansch 18a und einem flachen Segmentkörper 18b ausgebildet und mit dem Bremsdrehhebel 9 in nicht dargestellter Weise fest verbunden, z.B. verschraubt. Eine Mittellinie des Flansches 18a entspricht dabei der Hebelschwenkachse 9a, wobei die Hebelschwenkachse 9a hier die Schwenkachse des Hubsensorbetätigers 18 bildet. Es ist deutlich zu erkennen, dass die Hebelschwenkachse 9a nicht nur rechtwinklig zu der Sensorachse 15a der Sensoreinrichtung 15 sondern auch höhenversetzt zu ihr liegt, d.h. in einer anderen Ebene.

Ein Achsversatz, wie hier zwischen der Hebelschwenkachse 9a und der Sensorachse 15a, welche hier mit der Mitnehmerachse 5'a übereinstimmt, ist eine Folge der Auslegung des Bremsdrehhebels 9 als Exzenterhebel und lässt sich aus Bauraumgründen nicht ausgleichen. Eine Abhilfe schafft das Zahnrad 20 wie unten erläutert wird.

Am Außenumfang des Segmentkörpers 18b des Hubsensorbetätigers 18 ist eine Verzahnung 18c angebracht, welche in diesem Beispiel axial von dem Segmentkörper 18b zur Sensoreinrichtung 15 hervorsteht. Hier ist die Verzahnung 18c als Kronenradverzahnung vorgesehen, welche mit dem Zahnrad 20 der Hubsensorantriebseinheit 19 in Eingriff steht. Die Zahnradachse 20a dieses Zahnrads 20 verläuft rechtwinklig zur Hebelschwenkachse 9a und gleichzeitig parallel zur Sensorachse 15a der Sensoreinrichtung 15. Außerdem liegt die Zahnradachse 20a in der gleichen Ebene der Hebelschwenkachse 9a. Auf diese Weise ist der Achsversatz zwischen der Hebelschwenkachse 9a und der Sensorachse 15a ausgeglichen.

Das Zahnrad 20 ist mittels einer Halterung 23 drehbar gehalten. Die Halterung 23 umfasst einen Körper mit einem Befestigungsabschnitt 23a und einem Getriebeabschnitt 23b. Der Befestigungsabschnitt 23a und der Getriebeabschnitt 23b sind zylinderförmige Abschnitte, deren Mittelachsen parallel verlaufen und die untereinander verbunden sind. Der Befestigungsabschnitt 23a weist eine Durchgangsbohrung auf, wobei eine Außenwand mit flexiblen Haltearmen 33 ausgerüstet ist, die hier in die Außenwand eingeformt sind. Der Getriebeabschnitt 23b ist bremsscheibenseitig flach und geschlossen, wobei er zum Gehäuse 21 hin mit einem nicht näher bezeichneten Lagerbolzen ausgebildet ist, welcher eine Lagerung und axiale Begrenzung für das Zahnrad 20 bildet. Dies ist in Fig. 5 deutlich zu erkennen. Das Zahnrad 20 ist außerdem in der Deckplatte der ersten Getriebeaufnahme 21b des Gehäuses 21 gehalten. Dabei bildet diese Deckplatte eine weitere axiale Begrenzung des Zahnrads 20 mit Einhaltung eines erforderlichen, bestimmten axialen Spiels.

Die Halterung 23 ist mit ihrem Befestigungsabschnitt 23a auf dem Lagerabschnitt 21d des Gehäuses 21 aufgebracht, wobei eine Zentrierung der Halterung 23 durch Aufnahme eines Wellenabsatzes des bremsscheibenseitigen Endabschnitts des Sonnenrads 24 in der Durchgangsbohrung des Befestigungsabschnitts 23a erfolgt. Eine Fixierung der Halterung 23 auf dem Lagerabschnitt 21d des Gehäuses 21 wird durch eine Zusammenwirkung der flexiblen Haltearme 33 der Außenwand des Befestigungsabschnitts 23a der Halterung 23 mit der umlaufenden Nase 34 des Lagerabschnitts 21d des Gehäuses 21 erreicht, wobei die flexiblen Haltearme 33 für eine Verrastung mit der Nase 34 mit damit korrespondierenden Kerben oder Nasen ausgebildet sind. Die flexiblen Haltearme 33 und die Nase 34 bilden hier eine Klipsverbindung. Andere Verbindungsarten sind natürlich auch möglich.

Das Zahnrad 20 ist hier ein Stirnrad und bildet in diesem Ausführungsbeispiel eine Übersetzungsstufe zwischen dem Hubsensorbetätiger 18 und dem Planetenträger 25 des Sensorgetriebes 16. In diesem Fall bildet der Planetenträger 25 einen Eingang für die zweite von der Sensoreinrichtung 15 zu erfassende Größe, nämlich den Betätigungshub. Dabei steht das Zahnrad 20 einerseits mit der Verzahnung 18c des Hubsensorbetätigers 18 und andererseits mit einer Planetenträgerverzahnung 25a des Planetenträgers 25 in Eingriff. Da der Planetenträger 25 innerhalb der zweiten Getriebeaufnahme 21c angeordnet ist, weist deren teilzylinderförmige Wand die Öffnung 35 auf, durch welche der Eingriff zwischen dem Zahnrad 20 und der Planetenträgerverzahnung 25a ermöglicht wird. Dies ist in Fig. 5 schematisch dargestellt.

Mittels des Zahnrads 20 ist es möglich, dass die Übertragung des Betätigungshubs in Form einer Verschwenkung des Bremsdrehhebels 9 und somit des mit dem Bremsdrehhebel 9 fest verbundenen Hubsensorbetätigers 18 um die Hebelschwenkachse 9a mit einer bestimmten Übersetzung auf den Planetenträger 25 als Eingang und somit auf das Hohlrad 27 und weiter auf den Geber der Sensoreinrichtung 15 erfolgt. Die Übersetzungsstufe mit dem Zahnrad 20 oder auch mit weiteren Zahnrädern (nicht gezeigt, aber vorstellbar) ermöglicht es außerdem, dass eine Verdrehbewegung des Hohlrads 27 so abgestimmt ist, dass ein Messeffekt des Betätigungshubs ausreichend "mechanisch verstärkt" wird. Für eine exakte Erfassung des Betätigungshubs erfolgt die Übertragung möglichst spielarm.

Üblicherweise ist ein Winkelgetriebe, mit wenigen Ausnahmen, deutlich toleranzempfindlicher als ein Stirnradgetriebe. In diesem Ausführungsbeispiel ist das durch die Kronenverzahnung des Hubsensorbetätigers 18 und das Zahnrad 20 gebildete Winkelgetriebe bezüglich Positionstoleranzen relativ unempfindlich.

Weiterhin ist eine Variantenbildung, d.h. Erfassung von nur einer Größe (Verschleiß) oder von zwei Größen (Verschleiß und Betätigungshub) mit der gleichen Sensoreinrichtung 15 auf einfache Weise möglich. Für diesen Zweck ist die Sensoreinrichtung 15 aus dem ersten Zustand in den zweiten Zustand umstellbar.

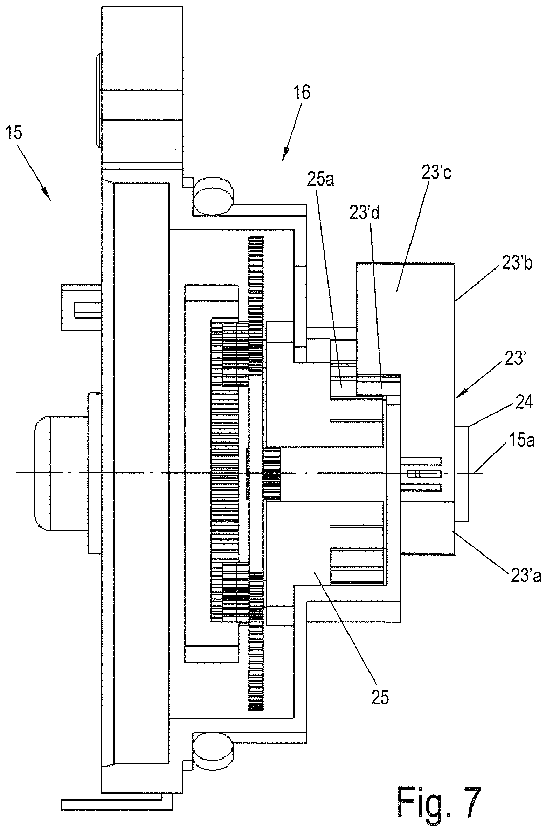

Dazu zeigt Fig. 6 eine schematische Perspektivansicht einer Variante des ersten Ausführungsbeispiels der erfindungsgemäßen Sensoreinrichtung 15. In Fig. 7 ist eine schematische, perspektivische Schnittansicht der Variante nach Fig. 6 dargestellt. Die Schnittansicht der Fig. 7 ist ähnlich wie Fig. 5 ein zu der mit der Mitnehmerachse 5'a zusammenfallenden Sensorachse 15a paralleler Schnitt in der Ebene der Hebelschwenkachse 9a, die hier nicht gezeigt, aber vorstellbar ist.

Im Falle der Verwendung der Sensoreinrichtung 15 in dem zweiten Zustand für nur eine zu erfassende Größe, nämlich für den Verschleiß, ist die Sensoreinrichtung 15 dazu entsprechend umstellbar. Eine solche Umstellung erfolgt dadurch, dass der Eingang für die zweite Größe blockiert wird, d.h. der Planetenträger 25 wird fixiert. Für eine solche Einstellung entfällt der Hubsensorantrieb 17 mit dem Hubsensorbetätiger 18 und der Hubsensorantriebseinheit 19 mit dem Zahnrad 20. Eine Blockierung des Eingangs für die zweite Größe wird dadurch erreicht, dass eine Verdrehsicherung des nun nicht mehr mit dem Zahnrad 20 in Eingriff stehenden Planetenträgers 25 erfolgt. Eine solche Verdrehsicherung kann durch ein Fixierteil (nicht gezeigt), welches anstelle des Zahnrads 20 eingesetzt wird, erfolgen, wobei dieses Fixierteil drehfest mit der Halterung 23 verbunden ist.

Eine weitere Verdrehsicherung ist mit einer alternativen Halterung 23' möglich.

Diese alternative Halterung 23' weist einen Befestigungsabschnitt 23'a, welcher dem oben beschriebenen Befestigungsabschnitt 23 der Halterung 23 entspricht, und einen Getriebeabschnitt 23'b auf. Der Getriebeabschnitt 23'b ist so ausgebildet, dass er sich zuspannseitig in die Öffnung 35 der zweiten Getriebeaufnahme 21c erstreckt und mit dem Rand dieser Öffnung 35 so zusammenwirkt, dass eine Verschwenkung der Halterung 23' um die Sensorachse 15a blockiert ist. Weiterhin ist der Getriebeabschnitt 23'b mit einem Fixierzahn 23'd versehen, welcher mit der Planetenträgerverzahnung 25a im Bereich der Öffnung 35 des Gehäuses 21 in Eingriff steht. Da der Fixierzahn 23'd fest mit dem Getriebeabschnitt 23'b und somit mit der feststehenden, alternativen Halterung 23' verbunden ist, wird auf diese Weise der Planetenträger 25 blockiert.

Auf diese einfache Weise ist es möglich, die Sensoreinrichtung 15 durch Verwendung der Halterung 23 mit Zahnrad 20 oder der alternativen Halterung 23' ohne Zahnrad 20 von dem ersten Zustand zur Erfassung von sowohl zwei Größen in den zweiten Zustand zur Erfassung von nur einer Größe, nämlich der ersten Größe, umzustellen. Diese Umstellung kann natürlich auch wieder rückgängig gemacht werden, indem das Zahnrad 20 mit der zugehörigen Halterung 23 verwendet wird.

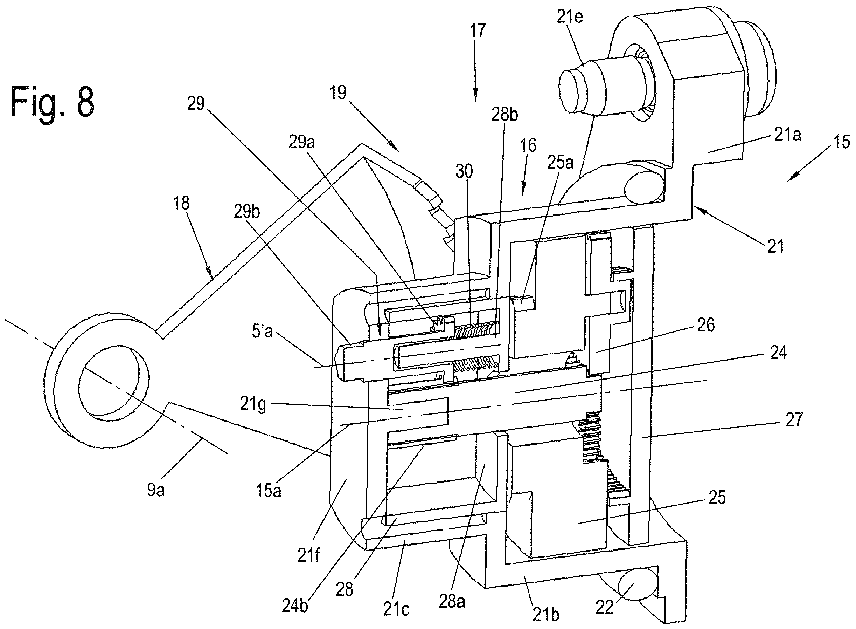

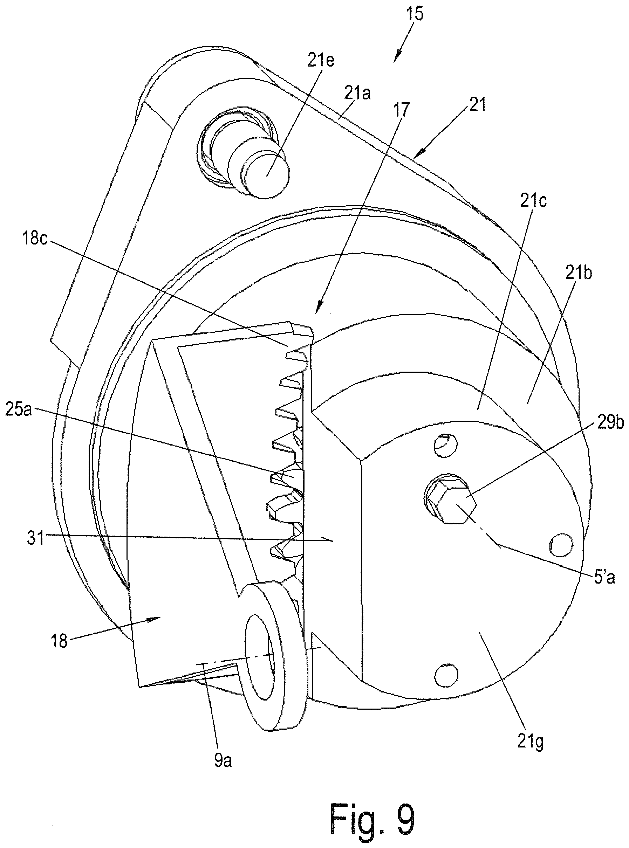

Fig. 8 zeigt eine schematische Schnittansicht eines zweiten Ausführungsbeispiels der erfindungsgemäßen Sensoreinrichtung 15, und in Fig. 9 ist dazu eine schematische Perspektivansicht des zweiten Ausführungsbeispiels nach Fig. 8 dargestellt. Die Schnittansicht der Fig. 8 ist ein zu der Mitnehmerachse 5'a und der dazu mit dem Achsversatz angeordneten Sensorachse 15a paralleler Schnitt in der Ebene der Hebelschwenkachse 9a. Die Sensoreinrichtung 15 wird zunächst in dem ersten Zustand zur Erfassung der ersten und der zweiten Größe gezeigt.

In dem zweiten Ausführungsbeispiel befinden sich die Hebelschwenkachse 9a und die Sensorachse 15a auf einer gemeinsamen Ebene. Die Sensorachse 15a verläuft hier nicht durch die Mitnehmerachse 5'a, welche in einem Abstand, der dem Achsversatz entspricht, versetzt von der Sensorachse 15a senkrecht zur Ebene der Hebelschwenkachse 9a der der Sensorachse 15a darüber angeordnet ist. Somit besteht der Achsversatz zwischen der Hebelschwenkachse 9a und der Mitnehmerachse 5'a.

Dadurch ist es möglich, dass die Verzahnung 18c, d.h. die Kronenradverzahnung, des Hubsensorbetätigers 18 direkt mit der Planetenträgerverzahnung 25a des Planetenträgers 25 in Eingriff stehen kann. Natürlich kann zur Erzielung einer bestimmten Übersetzung auch eine Zwischengetriebestufe vorgesehen sein. Auch in diesem Fall bildet hiermit der Planetenträger 25 den Eingang für die von der Sensoreinrichtung 15 zu erfassende zweite Größe.

In diesem zweiten Ausführungsbeispiel weist das Gehäuse 21 der Sensoreinrichtung 15 einen zu dem ersten Ausführungsbeispiel unterschiedlichen Aufbau auf. Eine axiale Länge der Wand der ersten Getriebeaufnahme 21b entspricht hier etwa der Summe aus den axialen Längen der Wände der ersten Getriebeaufnahme 21b und der zweiten Getriebeaufnahme 21c des ersten Ausführungsbeispiels, da in dem zweiten Ausführungsbeispiel das Hohlrad 27 mit den Planetenrädern 26 und dem Planetenträger 25 zusammen in der ersten Getriebeaufnahme 21b angeordnet sind.

Der Eingriff der Verzahnung 18c, d.h. Kronenradverzahnung, des Hubsensorbetätigers 18 mit der Planetenträgerverzahnung 25a, z.B. eine Stirnradverzahnung, des Planetenträgers 25 erfolgt in einer Öffnung der Wand der ersten Getriebeaufnahme 21b, die in einem planen Flächenabschnitt 31 eingebracht ist (siehe Fig. 9), der eine seitliche Abflachung der ersten Getriebeaufnahme 21b und zweiten Getriebeaufnahme 21c bildet.

Die zweite Getriebeaufnahme 21c ist mit einer Platte 21f verschlossen, welche in ihrem Innenraum einen zentrisch zur Sensorachse 15a angeordneten Achsabschnitt 21g zur Aufnahme des bremsscheibenseitigen Endes des Sonnenrads 24 aufweist. Das Sonnenrad 24 weist am zuspannseitigen Ende innerhalb der ersten Getriebeaufnahme 21b sein Ritzel auf und ist ohne Wellenabsätze im Bereich der zweiten Getriebeaufnahme 21c ausgebildet. Im bremsscheibenseitigen Endbereich des Sonnenrads 24 ist eine Innenbohrung zur Aufnahme des Achsabschnitt 21g und an der Außenseite des bremsscheibenseitigen Endbereichs eine Verzahnung 24b vorgesehen.

Innerhalb der zweiten Getriebeaufnahme 21c ist ein topfförmiger Einsatzträger 28 mit einem Einsatzboden 28a eingesetzt. Die offene Seite des Einsatzträgers 28 weist zur Bremsscheibe 2 hin. Der Einsatzboden 28a besitzt eine zu der Sensorachse 15a konzentrische Bohrung, durch welche sich das Sonnenrad 24 zwischen dem Innenraum der ersten Getriebeaufnahme 21b und der zweiten Getriebeaufnahme 21c hindurch erstreckt. Auf dem Einsatzboden 28a ist in einem Abstand, der dem Achsversatz zwischen der Hebelschwenkachse 9a und der Mitnehmerachse 5'a entspricht, senkrecht über der Sensorachse 15a ein sich zur Bremsscheibe 2 hin vom Einsatzboden 28a hervorstehender bolzenartiger Achsabschnitt 28b angebracht. Der Achsabschnitt 28b dient zur Aufnahme einer Antriebswelle 29, die mit einer Innenbohrung auf dem Achsabschnitt 28b aufgesetzt ist.

Ein zuspannseitiges Ende der Antriebswelle 29 ist mit einem Antriebsrad 29a ausgebildet, dessen Verzahnung mit der Verzahnung 24b des Sonnenrads 24 in Eingriff steht. Das Antriebsrad 29a und die Verzahnung 24b bilden somit auch eine Getriebestufe (Stirnradstufe) ähnlich dem Zahnrad 20 zum Ausgleich des Achsversatzes.

Die Antriebswelle 29 ist auf dem Achsabschnitt 28b axial verschiebbar geführt gehalten, wobei die Verzahnung des Antriebsrads 29a im Eingriff mit der Verzahnung 24b, z.B. Stirnradverzahnung, des Sonnenrads 24 relativ zu der Verzahnung 24b verschiebbar ist.

Zwischen dem zuspannseitigen Ende dieser Antriebswelle 29 und dem Einsatzboden 28a ist um den Achsabschnitt 28b herum ein Federelement 30 angeordnet, welches eine axiale Vorspannkraft auf die Antriebswelle 29 in Richtung zur Bremsscheibe 2 hin ausübt, wobei die Innenseite der Platte 21f einen axialen Anschlag für das Antriebsrad 29a und somit für die Antriebswelle 29 bildet.

In diesem Fall bildet die Antriebswelle 29 den Eingang für die von der Sensoreinrichtung 15 zu erfassende erste Größe, nämlich den Verschleiß, wobei ein bremsscheibenseitiges Ende der Antriebswelle 29 einen Antriebskopplungsabschnitt 29b aufweist, der zur Kopplung mit dem zuspannseitigen Ende der Mitnehmerwelle 12a oder einem Zwischenbauteil für diesen Zweck ausgebildet ist, z.B. mit einem Sechskantprofil. Die axiale Vorspannkraft des Federelementes 30 gleicht axiale Abstände zwischen dem anzukoppelnden Ende der Mitnehmerwelle 12a und der Antriebswelle 29 aus und gewährleistet eine sichere Kopplung. Die Antriebswelle 29 erstreckt sich in Richtung auf die Bremsscheibe 2 hin durch eine Bohrung der Platte 21f der zweiten Getriebeaufnahme 21c hindurch, wobei das bremsscheibenseitige Ende der Antriebswelle 29 mit dem Antriebskopplungsabschnitt 29b von der Außenseite der Platte 21f in Richtung auf die Bremsscheibe 2 hin hervorsteht.

Die Wand der zweiten Getriebeaufnahme 21c ist in diesem zweiten Ausführungsbeispiel nicht vollständig kreisförmig umlaufend, sondern mit der seitlichen Abflachung versehen, welche den Flächenabschnitt 31 bildet. Somit weist ein Querschnitt der zweiten Getriebeaufnahme 21c seitlich eine Gerade auf, wodurch der topfförmige Einsatzträger 28, der mit einem damit korrespondierenden Querschnitt ausgeführt ist, eindeutig und nicht um seine Achse verdrehbar in die zweite Getriebeaufnahme 21c einsetzbar ist.

Weiterhin erleichtert die Abflachung mit dem Flächenabschnitt 31 einen Einbau der Sensoreinrichtung 15 in axialer Richtung derart, dass die zweite Getriebeaufnahme 21c an der Verzahnung 18c des Hubsensorbetätigers 18 vorbei bewegt werden kann.

Auch das zweite Ausführungsbeispiel der Sensoreinrichtung 15 kann von dem gezeigten ersten Zustand in den zweiten Zustand zur Erfassung von nur einer Größe, nämlich der ersten Größe (Verschleiß), umgestellt werden.

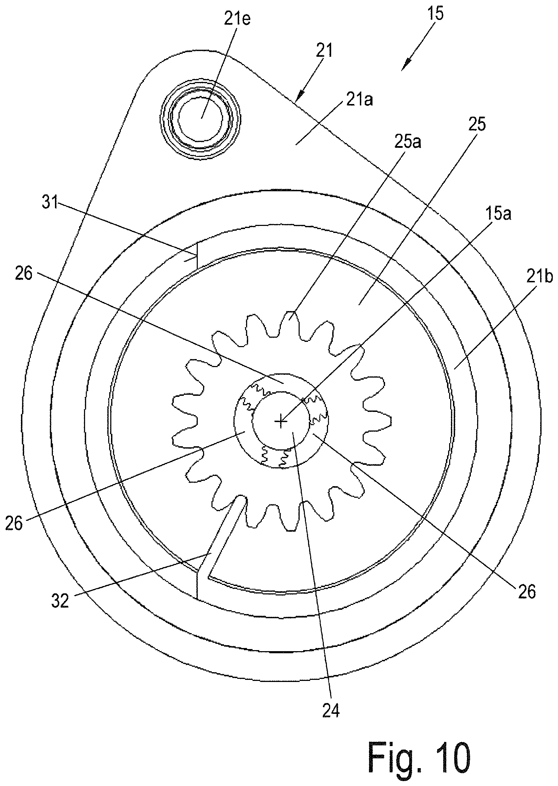

Dies ist in Fig. 10 in einer weiteren schematischen Schnittansicht des zweiten Ausführungsbeispiels nach Fig. 8 dargestellt. Der Schnitt verläuft in einer Ebene senkrecht zu der Sensorachse 15a durch die erste Getriebeaufnahme 21b im Bereich der Planetenträgerverzahnung 25a.

Auch in diesem Fall wird die Sensoreinrichtung 15 von dem ersten Zustand in den zweiten Zustand zur Erfassung von nur einer, nämlich der ersten Größe, dadurch umgestellt, indem der Eingang für die zweite Größe, d.h. der Planetenträger 25, blockiert wird. Eine Blockierung wird durch die Fixierung des Planetenträgers 25 dergestalt erreicht, dass mindestens ein Fixierarm 32, der mit dem Gehäuse 21, d.h. der Wand der ersten Getriebeaufnahme 21b fest verbunden ist, mit der Planetenträgerverzahnung 25a in Eingriff steht und somit den Planetenträger 25 drehfest blockiert.

In einer Variante ist der Fixierarm 32 so gestaltet, dass er für die Variante der Sensoreinrichtung 15 zur Erfassung von zwei Größen zur Freigabe des Drehbarkeit des Planetenträgers 25 abgebrochen werden kann, z.B. aufgrund einer Sollbruchstelle. Damit ist die Umstellbarkeit irreversibel.

Eine andere Variante sieht eine reversible Umstellbarkeit derart vor, dass der Fixierarm 32 als separates Teil anbringbar und wieder entfernbar ist, z.B. als Steckbauteil in einer Führung der Wand der ersten Getriebeaufnahme 21b. Natürlich sind mehrere Fixierarme 32 denkbar.

Die oben beschriebenen Ausführungsbeispiele schränken die Erfindung nicht ein. Sie ist im Rahmen der beigefügten Ansprüche modifizierbar.

Es ist beispielsweise denkbar, dass die Blockierung des Planetenträgers 25 im zweiten Zustand der Sensoreinrichtung 15 dadurch erfolgt, dass das Zahnrad 20 durch einen Fixierstift mit der Halterung 23 verdrehfest blockiert wird, in dem dieser Fixierstift durch eine Bohrung der Halterung 23 in eine dafür vorgesehen Bohrung des Zahnrads 20 eingesteckt wird.

Der Fixierarm 32 kann auch Bestandteil eines Einsetzteils sein, das z.B. in die Öffnung der ersten Getriebeaufnahme 21b einklipsbar und wieder entfernbar ist.

So kann z.B. die Kronenradverzahnung 18c des Hubsensorbetätigers 18 anstelle des Planetenträgers 25 mit dem Hohlrad 28 gekoppelt sein, wobei das Hohlrad 28 eine dazu entsprechende Verzahnung aufweist.

Zwischengetriebestufen zwischen Kronenradverzahnung 18c des Hubsensorbetätigers 18 und dem Planetenträger 25 bzw. Hohlrad 28 sind selbstverständlich möglich.

Es ist denkbar, dass anstelle eines Potentiometers eine andere Einheit in der Sensoreinrichtung vorgesehen ist, z.B. ein Winkelsensor mit Hall-Elementen.

Anstelle der Kronenradverzahnung der Verzahnung 18c des Hubsensorbetätigers 18 und des Zahnrads 20 sind auch Kegelradverzahnungen denkbar, wobei das Zahnrad 20 zur Kopplung mit dem Sensorgetriebe 16 eine weitere Verzahnung, z.B. Stirnradverzahnung aufweist.

### Bezugszeichen liste

- 1: Scheibenbremse
- 2: Bremsscheibe
- 2a: Bremsscheibenachse
- 3: Bremsbelag
- 3a: Bremsbelagträger
- 4: Bremssattel
- 5, 5': Spindeleinheit
- 5a: Nachstellerachse
- 5'a: Mitnehmerachse
- 6, 6': Gewinderohr
- 6a, 6'a: Druckstück
- 7: Brücke
- 8: Rückstellfeder
- 9: Bremsdrehhebel
- 9a: Hebelschwenkachse
- 9b: Hebelarm
- 10: Verschleißnachstellvorrichtung
- 11: Nachstelleinrichtung
- 11a: Nachstellerwelle
- 12: Mitnehmer
- 12a: Mitnehmerwelle
- 13: Synchroneinheit
- 13a, 13'a: Synchronrad
- 13b: Synchronmittel
- 14: Nachstellerantrieb
- 14a: Betätiger
- 14b: Nachstellerantriebselement
- 15: Sensoreinrichtung
- 15a: Sensorachse
- 15b: Sensoranschlussleitung
- 16: Sensorgetriebe
- 17: Hubsensorantrieb
- 18: Hubsensorbetätiger
- 18a: Flansch
- 18b: Segmentkörper
- 18c: Verzahnung
- 19: Hubsensorantriebseinheit
- 20: Zahnrad
- 20a: Zahnradachse
- 21: Gehäuse
- 21a: Gehäuseflansch
- 21b, 21c: Getriebeaufnahme
- 21d: Lagerabschnitt
- 21e: Befestigungselement
- 21f: Boden
- 21g: Achsabschnitt
- 22: Dichtung
- 23, 23': Halterung
- 23a, 23'a: Befestigungsabschnitt
- 23b, 23'b: Getriebeabschnitt
- 23'c: Fixierabschnitt
- 23'd: Fixierzahn
- 24: Sonnenrad
- 24a: Kopplungsabschnitt
- 24b: Verzahnung
- 25: Planetenträger
- 25a: Planetenträgerverzahnung
- 26: Planetenrad
- 27: Hohlrad
- 28: Einsatzträger
- 28a: Einsatzboden
- 28b: Achsabschnitt
- 29: Antriebswelle
- 29a: Antriebsrad
- 29b: Antriebskopplungsabschnitt
- 30: Federelement
- 31: Flächenabschnitt
- 32: Fixierarm
- 33: Haltearm
- 34: Nase
- 35: Öffnung

## Patentansprüche

1. Sensoreinrichtung (15) für eine Scheibenbremse (1), aufweisend ein mit mindestens einem Geber koppelbares Sensorgetriebe (16), wobei das Sensorgetriebe (16) in einem Gehäuse (21) als ein Planetengetriebe angeordnet ist und einen Eingang für eine von der Sensoreinrichtung (15) zu erfassende erste Größe, die einem Verschleiß der Scheibenbremse (1) zugeordnet ist, und einen Eingang für eine von der Sensoreinrichtung (15) zu erfassende zweite Größe, die einem Betätigungshub der Scheibenbremse (1) zugeordnet ist, aufweist,
**dadurch gekennzeichnet, dass** die Sensoreinrichtung (15) aus einem ersten Zustand zur Erfassung der ersten Größe, die einem Verschleiß der Scheibenbremse (1) zugeordnet ist, und der zweiten Größe, die einem Betätigungshub der Scheibenbremse (1) zugeordnet ist, in einen zweiten Zustand zur Erfassung von nur der ersten Größe, die einem Verschleiß der Scheibenbremse (1) zugeordnet ist, umstellbar ist.

2. Sensoreinrichtung (15) nach Anspruch 1, **dadurch gekennzeichnet, dass** der Eingang des Sensorgetriebes (16) für die zu erfassende erste Größe ein Sonnenrad (24) des Sensorgetriebes (16) ist, und ein Eingang für die zu erfassende zweite Größe ein Planetenträger (25) des Sensorgetriebes (16) mit einer Planetenträgerverzahnung (25a) ist.

3. Sensoreinrichtung (15) nach Anspruch 2, **dadurch gekennzeichnet, dass** der Eingang für die zu erfassende zweite Größe in dem ersten Zustand der Sensoreinrichtung (15) mit einer Hubsensorantriebseinheit (19) in Eingriff steht und in dem zweiten Zustand der Sensoreinrichtung (15) blockiert ist.

4. Sensoreinrichtung (15) nach Anspruch 3, **dadurch gekennzeichnet, dass** die Hubsensorantriebseinheit (19) mindestens ein Zahnrad (20) aufweist, welches in dem ersten Zustand der Sensoreinrichtung (15) mit der Planetenträgerverzahnung (25a), die eine Außenverzahnung ist, in einer Öffnung (35) des Gehäuses (21) in Eingriff steht.

5. Sensoreinrichtung (15) nach Anspruch 4, **dadurch gekennzeichnet, dass** das mindestens eine Zahnrad (20) in einer Halterung (23) und dem Gehäuse (21) drehbar gelagert und axial begrenzt ist.

6. Sensoreinrichtung (15) nach Anspruch 5, **dadurch gekennzeichnet, dass** die Halterung (23) an dem Gehäuse (21) wieder entfernbar befestigbar ist.

7. Sensoreinrichtung (15) nach Anspruch 3, **dadurch gekennzeichnet, dass** der Eingang für die zu erfassende zweite Größe in dem zweiten Zustand der Sensoreinrichtung (15) durch mindestens einen Fixierzahn (23'd) einer mit dem Gehäuse (21) verdrehfest verbundenen Halterung (23') verdrehfest blockiert ist, wobei der mindestens eine Fixierzahn (23'd) mit der Planetenträgerverzahnung (25a), welche eine Außenverzahnung ist, in einer Öffnung (35) des Gehäuses (21) in Eingriff steht.

8. Sensoreinrichtung (15) nach Anspruch 7, **dadurch gekennzeichnet, dass** die Halterung (23') an dem Gehäuse (21) wieder entfernbar befestigbar ist.

9. Sensoreinrichtung (15) nach Anspruch 1, **dadurch gekennzeichnet, dass** der Eingang des Sensorgetriebes (16) für die zu erfassende erste Größe eine Antriebswelle (29) mit mindestens einer Getriebestufe ist, die mit einem Sonnenrad (24) des Sensorgetriebes (16) gekoppelt ist, und ein Eingang für die zu erfassende zweite Größe ein Planetenträger (25) des Sensorgetriebes (16) mit einer Planetenträgerverzahnung (25a) ist.

10. Sensoreinrichtung (15) nach Anspruch 9, **dadurch gekennzeichnet, dass** der Eingang für die zu erfassende zweite Größe in dem ersten Zustand der Sensoreinrichtung (15) mit einer Hubsensorantriebseinheit (19) in Eingriff steht oder zum direkten Eingriff eines Hubsensorbetätigers (18) einer zuzuordnenden Scheibenbremse (1) vorgesehen ist und in dem zweiten Zustand der Sensoreinrichtung (15) blockiert ist.

11. Sensoreinrichtung (15) nach Anspruch 10, **dadurch gekennzeichnet, dass** der Eingang für die zu erfassende zweite Größe in dem zweiten Zustand der Sensoreinrichtung (15) durch mindestens einen Fixierarm (32) verdrehfest blockiert ist, wobei der mindestens eine Fixierarm (32) mit der Planetenträgerverzahnung (25a), welche eine Außenverzahnung ist, in Eingriff steht.

12. Sensoreinrichtung (15) nach Anspruch 11, **dadurch gekennzeichnet, dass** der mindestens eine Fixierarm (32) an dem Gehäuse (21) wieder entfernbar befestigbar oder mit dem Gehäuse (21) über einen Sollbruchabschnitt trennbar verbunden ist.

13. Sensoreinrichtung (15) nach Anspruch 11, **dadurch gekennzeichnet, dass** der mindestens eine Fixierarm (32) in Gestalt eines Einsetzteils in das Gehäuse (21) verdrehfest einsetzbar und wieder entfernbar ist.

14. Sensoreinrichtung (15) nach einem der vorhergehenden Ansprüche, weiterhin aufweisend mindestens einen Geber, der mit dem Sensorgetriebe (16) gekoppelt ist.

15. Scheibenbremse (1), insbesondere für ein Kraftfahrzeug, mit einer Zuspannvorrichtung mit einer Spreizmechanik, vorzugsweise mit einem Bremsdrehhebel (2), einer Verschleißnachstellvorrichtung (10), welche mindestens eine mechanische Nachstelleinrichtung (11) aufweist, die vorzugsweise in eine Spindeleinheit (6, 6') der Scheibenbremse (1) einsetzbar und mit der Spreizmechanik, vorzugsweise mit dem Bremsdrehhebel (9), gekoppelt ist, mit einer Sensoreinrichtung (15) nach einem der vorhergehenden Ansprüche,
**dadurch gekennzeichnet, dass**
der Eingang des Sensorgetriebes (16) der Sensoreinrichtung (15) für die zu erfassende erste Größe mit der mindestens einen mechanischen Nachstelleinrichtung (11) gekoppelt ist, und der Eingang des Sensorgetriebes (16) der Sensoreinrichtung (15) für die zu erfassende zweite Größe mit der Spreizmechanik, vorzugsweise mit dem Bremsdrehhebel (2), über einen Hubsensorantrieb (17) gekoppelt ist.

16. Scheibenbremse (1) nach Anspruch 15, aufweisend mindestens zwei Spindeleinheiten (5, 5'), wobei die mindestens eine mechanische Nachstelleinrichtung (11) mit einem Mitnehmer (12) über ein Synchroneinheit (13) gekoppelt ist, **dadurch gekennzeichnet, dass** der Eingang des Sensorgetriebes (16) der Sensoreinrichtung (15) für die zu erfassende erste Größe mit einer Mitnehmerwelle (12a) des Mitnehmers (12) gekoppelt ist.

17. Scheibenbremse (1) nach Anspruch 15 oder 16, **dadurch gekennzeichnet, dass** der Hubsensorantrieb (17) ein Winkelgetriebe aufweist.

18. Scheibenbremse (1) nach Anspruch 17, **dadurch gekennzeichnet, dass** der Hubsensorantrieb (17) als Winkelgetriebe einen Hubsensorbetätiger (18) mit einer Verzahnung (18c) aufweist, die eine Kronenradverzahnung ist.

19. Scheibenbremse (1) nach einem der Ansprüche 15 bis 18, **dadurch gekennzeichnet, dass** ein Achsversatz zwischen einer Ebene einer Hebelschwenkachse (9a) des Bremsdrehhebels (9) und einer Ebene einer Sensorachse (15a) der Sensoreinrichtung (15) durch mindestens eine Getriebestufe der Hubsensorantriebseinheit (19) ausgeglichen ist.

20. Scheibenbremse (1) nach einem der Ansprüche 15 bis 18, **dadurch gekennzeichnet, dass** die Sensoreinrichtung (15) in der Scheibenbremse (1) so angeordnet ist, dass ein Achsversatz zwischen einer Ebene einer Hebelschwenkachse (9a) des Bremsdrehhebels (9), in welcher eine Sensorachse (15a) der Sensoreinrichtung (15) liegt, und einer Ebene einer Achse (5a, 5'a) einer Spindeleinheit durch mindestens eine Getriebestufe einer Antriebswelle (29), welche ein Eingang des Sensorgetriebes (16) der Sensoreinrichtung (15) für die zu erfassende erste Größe ist, ausgeglichen ist.

21. Scheibenbremse (1) nach einem der Ansprüche 15 bis 20, **dadurch gekennzeichnet, dass** die Scheibenbremse (1) druckluftbetätigt ist.

## Claims

1. Sensor device (15) for a disc brake (1), having a sensor gearing (16) which can be coupled to at least one encoder, wherein the sensor gearing (16) is arranged in a housing (21) as a planetary gearing and has an input for a first variable to be detected by the sensor device (15), which first variable is associated with wear of the disc brake (1), and an input for a second variable to be detected by the sensor device (15), which second variable is associated with an actuation stroke of the disc brake (1),
**characterised in that** the sensor device (15) is capable of being converted from a first state, for detecting the first variable which is associated with wear of the disc brake (1) and detecting the second variable which is associated with an actuation stroke of the disc brake (1), into a second state for detecting only the first variable which is associated with wear of the disc brake (1).

2. Sensor device (15) according to claim 1, **characterised in that** the input of the sensor gearing (16) for the first variable to be detected is a sun gear (24) of the sensor gearing (16), and an input for the second variable to be detected is a planet carrier (25) of the sensor gearing (16) with a planet carrier toothing (25a).

3. Sensor device (15) according to claim 2, **characterised in that**, in the first state of the sensor device (15), the input for the second variable to be detected is in engagement with a stroke sensor drive unit (19), and in the second state of the sensor device (15), said input is blocked.

4. Sensor device (15) according to claim 3, **characterised in that** the stroke sensor drive unit (19) has at least one gear (20) which, in the first state of the sensor device (15), engages with the planet carrier toothing (25a), which is an external toothing, in an opening (35) of the housing (21).

5. Sensor device (15) according to claim 4, **characterised in that** the at least one gear (20) is rotatably mounted, and axially delimited, in a bracket (23) and in the housing (21).

6. Sensor device (15) according to claim 5, **characterised in that** the bracket (23) can be fastened in a removable fashion to the housing (21).

7. Sensor device (15) according to claim 3, **characterised in that** the input for the second variable to be detected is, in the second state of the sensor device (15), non-rotatably blocked by at least one fixing tooth (23'd) of a bracket (23') which is non-rotatable connected to the housing (21), wherein the at least one fixing tooth (23'd) is in engagement with the planet carrier toothing (25a), which is an external toothing, in an opening (35) of the housing (21).

8. Sensor device (15) according to claim 7, **characterised in that** the bracket (23') can be fastened in a removable fashion to the housing (21).

9. Sensor device (15) according to claim 1, **characterised in that** the input of the sensor gearing (16) for the first variable to be detected is a drive shaft (29) with at least one gearing stage which is coupled to a sun gear (24) of the sensor gearing (16), and an input for the second variable to be detected is a planet carrier (25) of the sensor gearing (16) with a planet carrier toothing (25a).

10. Sensor device (15) according to claim 9, **characterised in that**, in the first state of the sensor device (15), the input for the second variable to be detected is in engagement with a stroke sensor drive unit (19) or is provided for direct engagement of a stroke sensor actuator (18) of an associated disc brake (1), and in the second state of the sensor device (15), said input is blocked.

11. Sensor device (15) according to claim 10, **characterised in that**, in the second state of the sensor device (15), the input for the second variable to be detected is non-rotatably blocked by at least one fixing arm (32), wherein the at least one fixing arm (32) is in engagement with the planet carrier toothing (25a), which is an external toothing.

12. Sensor device (15) according to claim 11, **characterised in that** the at least one fixing arm (32) can be fastened in a removable fashion to the housing (21) or is connected in a separable manner to the housing (21) by way of a predetermined breaking section.

13. Sensor device (15) according to claim 11, **characterised in that** the at least one fixing arm (32), in the form of an insert part, is non-rotatably insertable into, and removable from, the housing (21).

14. Sensor device (15) according to any of the preceding claims, further comprising at least one encoder which is coupled to the sensor gearing (16).

15. Disc brake (1), in particular for a motor vehicle, comprising an application device with a spreading mechanism, preferably with a brake rotary lever (2), a wear-compensating readjustment apparatus (10) which has at least one mechanical readjustment device (11) which is preferably insertable into a spindle unit (6, 6') of the disc brake (1) and coupled to the spreading mechanism, preferably to the brake rotary lever (9), and further comprising a sensor device (15) according to any of the preceding claims,
**characterised in that** the input of the sensor gearing (16) of the sensor device (15) for the first variable to be detected is coupled to the at least one mechanical readjustment device (11), and the input of the sensor gearing (16) of the sensor device (15) for the second variable to be detected is coupled to the spreading mechanism, preferably to the brake rotary lever (2), by way of a stroke sensor drive (17).

16. Disc brake (1) according to claim 15, comprising at least two spindle units (5, 5'), wherein the at least one mechanical readjustment device (11) is coupled to a driver (12) by way of a synchronising unit (13), **characterised in that** the input of the sensor gearing (16) of the sensor device (15) for the first variable to be detected is coupled to a driver shaft (12a) of the driver (12).

17. Disc brake (1) according to claim 15 or 16, **characterised in that** the stroke sensor drive (17) has an angular gearing.

18. Disc brake (1) according to claim 17, **characterised in that** the stroke sensor drive (17) has, as an angular gearing, a stroke sensor actuator (18) with a toothing (18c) which is a crown gear toothing.

19. Disc brake (1) according to any of claims 15 to 18, **characterised in that** an axial offset between a plane of a lever pivot axis (9a) of the brake rotary lever (9) and a plane of a sensor axis (15a) of the sensor device (15) is compensated by way of at least one gearing stage of the stroke sensor drive unit (19).

20. Disc brake (1) according to any of claims 15 to 18, **characterised in that** the sensor device (15) is arranged in the disc brake (1) such that an axial offset between a plane of a lever pivot axis (9a) of the brake rotary lever (9), in which a sensor axis (15a) of the sensor device (15) lies, and a plane of an axis (5a, 5'a) of a spindle unit is compensated by at least one gearing stage of a drive shaft (29) which is an input of the sensor gearing (16) of the sensor device (15) for the first variable to be detected.

21. Disc brake (1) according to any of claims 15 to 20, **characterised in** the disc brake (1) is actuated by compressed air.

## Revendications

1. Dispositif (15) de capteur pour un frein (1) à disque, comportant une transmission (16) de capteur pouvant être accouplée à au moins un transmetteur, la transmission (16) de capteur étant disposée sous la forme d'un train épicycloïdal dans un carter (21) et ayant une entrée pour une première grandeur à détecter par le dispositif (15) de capteur et associée à une usure du frein (1) à disque et une entrée pour une deuxième grandeur à détecter par le dispositif (15) de capteur et associée à une course d'actionnement du frein (1) à disque,
**caractérisé en ce que** le dispositif (15) de capteur peut passer d'un premier état de détection de la première grandeur, qui est associée à une usure du frein (1) à disque, et de la deuxième grandeur, qui est associée à une course d'actionnement du frein (1) à disque, à un deuxième état de détection de seulement la première grandeur, qui est associée à une usure du frein (1) à disque.

2. Dispositif (15) de capteur suivant la revendication 1, **caractérisé en ce que** l'entrée de la transmission (16) de capteur, pour la première grandeur à détecter, est une roue (24) solaire de la transmission (16) de capteur et une entrée, pour la deuxième grandeur à détecter, est une cage (25) de la transmission (16) de capteur ayant une denture (25a) de cage.

3. Dispositif (15) de capteur suivant la revendication 1, **caractérisé en ce que** l'entrée, pour la deuxième grandeur à détecter, est, dans le premier état du dispositif (15) de capteur, en prise avec une unité (19) d'entraînement d'un capteur de course et est bloquée dans le deuxième état du dispositif (15) de capteur.

4. Dispositif (15) de capteur suivant la revendication 3, **caractérisé en ce que** l'unité (19) d'entraînement du capteur de course a au moins une roue (20) dentée, qui, dans le premier état du dispositif (15) de capteur, engrène avec la denture (25a) de la cage, qui est une denture extérieure, dans une ouverture (35) du carter (21).

5. Dispositif (15) de capteur suivant la revendication 4, **caractérisé en ce que** la au moins une roue (20) dentée est montée tournante dans une fixation (23) et le carter (21) et est limitée axialement.

6. Dispositif (15) de capteur suivant la revendication 5, **caractérisé en ce que** la fixation (23) peut être fixée sur le carter (21) avec possibilité d'en être retirée.

7. Dispositif (15) de capteur suivant la revendication 3, **caractérisé en ce que** l'entrée pour la deuxième grandeur à détecter est, dans le deuxième état du dispositif (15) de capteur, bloquée d'une manière fixe à la torsion par au moins une dent (23'd) d'immobilisation d'une fixation (23') reliée d'une manière fixe à la torsion au carter (21), la au moins une dent (23'd) d'immobilisation étant en prise avec la denture (25a) de cage, qui est une denture extérieure, dans une ouverture (35) du carter (21).

8. Dispositif (15) de capteur suivant la revendication 7, **caractérisé en ce que** la fixation (23') peut être fixée sur le carter (21) avec possibilité de la retirer.

9. Dispositif (15) de capteur suivant la revendication 1, **caractérisé en ce que** l'entrée de la transmission (16) de capteur, pour la première grandeur à détecter, est un arbre (29) d'entraînement ayant au moins un étage de transmission accouplé à une roue (24) solaire de la transmission (16) de capteur et une entrée pour la deuxième grandeur à détecter est une cage (25) de la transmission (16) de capteur ayant une denture (25a) de cage.

10. Dispositif (15) de capteur suivant la revendication 9, **caractérisé en ce que** l'entrée pour la deuxième grandeur à détecter est en prise dans le premier état du dispositif (15) de capteur avec une unité (19) d'entraînement de capteur de course ou il est prévu, pour la pénétration directe d'un actionneur (18) de capteur de course, un frein à disque à associer et elle est bloquée dans le deuxième état du dispositif (15) de capteur.

11. Dispositif (15) de capteur suivant la revendication 10, **caractérisé en ce que** l'entrée pour la deuxième grandeur à détecter est, dans le deuxième état du dispositif (15) de capteur, bloquée d'une manière fixe à la torsion par au moins un bras (32) d'immobilisation, le au moins un bras (32) d'immobilisation étant en prise avec la denture (25a) de cage, qui est une denture extérieure.

12. Dispositif (15) de capteur suivant la revendication 11, **caractérisé en ce qu'**au moins un bras (32) d'immobilisation peut être fixé sur le carter (21) avec possibilité d'en être retiré ou est relié de manière séparable au carter (21) par un tronçon destiné à se rompre.

13. Dispositif (15) de capteur suivant la revendication 11, **caractérisé en ce qu'**au moins un bras (32) d'immobilisation peut, sous la forme d'une pièce d'insertion, être inséré d'une manière fixe à la torsion dans le carter et en être retiré.

14. Dispositif (15) de capteur suivant l'une des revendications précédentes, comportant en outre au moins un transmetteur, qui est accouplé à la transmission (16) de capteur.

15. Frein (1) à disque, notamment pour un véhicule automobile, comprenant un système de serrage ayant un mécanisme d'écartement, comprenant de préférence un levier (2) tournant de frein, un système (10) de rattrapage d'usure, qui a au moins un dispositif (11) mécanique de rattrapage, lequel, de préférence, peut être inséré dans une unité (6, 6') de broche du disque (1) de frein et être accouplé au mécanisme d'écartement, de préférence par le levier (19) tournant de frein, comprenant un dispositif (15) de capteur suivant l'une des revendications précédentes,
**caractérisé en ce que**
l'entrée de la transmission (16) de capteur du dispositif (15) de capteur, pour la première grandeur à détecter, est accouplée au au moins un dispositif (11) mécanique de rattrapage et l'entrée de la transmission (16) de capteur du dispositif (15) de capteur, pour la deuxième grandeur à détecter, est accouplée au mécanisme d'écartement, de préférence au levier (2) tournant de frein, par un entraînement (17) de capteur de course.

16. Frein (1) à disque suivant la revendication 15, comportant au moins deux unités (5, 5') de broche, le au moins un dispositif (11) mécanique de rattrapage étant accouplé à un entraîneur (12) par une unité (13) de synchronisation, **caractérisé en ce que** l'entrée de la transmission (16) de capteur du dispositif (15) de capteur, pour la première grandeur à détecter, est accouplée à un arbre (12a) de l'entraîneur (12).

17. Frein (1) à disque suivant la revendication 15 ou 16, **caractérisé en ce que** l'entraînement (17) de capteur de course comporte un engrenage angulaire.

18. Frein (1) à disque suivant la revendication 17, **caractérisé en ce que** l'entraînement (17) de capteur de course comporte, comme engrenage angulaire, un actionneur (18) de capteur de course ayant une denture, qui est une denture de roue de chant.

19. Frein (1) à disque suivant l'une des revendications 15 à 18, **caractérisé en ce que** le décalage axial entre un plan d'un axe (9a) de pivotement du levier (9) tournant de frein et un plan d'un axe (15a) de capteur du dispositif (15) de capteur est compensé par au moins un étage de transmission de l'unité (19) d'entraînement du capteur de course.

20. Frein (1) à disque suivant l'une des revendications 15 à 18, **caractérisé en ce que** le dispositif (15) de capteur est disposé dans le frein (1) à disque, de manière à compenser un décalage axial entre un plan d'un axe (9a) de pivotement du levier (9) tournant de frein, dans lequel se trouve un axe (15a) de capteur du dispositif (15) de capteur et un plan d'un axe (5a, 5'a) d'une unité de broche, par au moins un étage de transmission d'un arbre (29) d'entraînement, qui est une entrée de la transmission (16) de capteur du dispositif (15) de capteur pour la première grandeur à détecter.

21. Frein (1) à disque suivant l'une des revendications 15 à 20, **caractérisé en ce que** le frein (1) à disque est actionné par de l'air comprimé.
